# EUROPEAN PATENT APPLICATION

(11) **EP 4 533 991 A1**
(43) Date of publication of application: **09.04.2025**
(21) Application number: 23811108.2
(22) Date of filing: 24.05.2023
(51) Int. Cl.: A47L 11/40

(54) **AUTOMATIC WATER REPLACEMENT ASSEMBLY AND SELF-CLEANING MAINTENANCE STATION**

(30) Priority: 25.05.2022 CN 202210573125; 17.06.2022 CN 202221529876 U
(71) Applicant: Beijing Roborock Technology Co., Ltd., Beijing 102206 (CN)
(72) Inventor: WU, Jiansheng, Beijing 102206 (CN); LIU, Yaoxin, Beijing 102206 (CN); YU, Luping, Beijing 102206 (CN)
(74) Representative: Winter, Brandl - Partnerschaft mbB
(86) International application number: PCT/CN2023/096121
(87) International publication number: WO 2023/227038

(57) **Abstract**

The present invention provides an automatic water replacement assembly and a self-cleaning maintenance station. The automatic water replacement assembly comprises: a control apparatus and a water tank assembly. The control apparatus is provided inside the water tank assembly and configured to implement automatic injection of clear water into the water tank assembly. The water tank assembly comprises: a clear water tank body; a water inlet pipe configured to inject clear water into the clear water tank body; and a float valve provided in the clear water tank body and configured to vertically move as the height of the water surface in the clear water tank body changes. **In** response to the float valve located at a first position, the control apparatus controls the water inlet pipe to stop injecting clear water into the clear water tank body; in response to the float valve located at a second position, the float valve blocks an outlet of the water inlet pipe for water injection to the clear water tank body.

## Description

### CROSS-REFERENCE TO RELATED APPLICATION

The present disclosure claims priorities to Chinese Patent Application No. 202210573125.8 filed on May 25, 2022 and Chinese Patent Application No. 202221529876.1 filed on June 17, 2022, which are incorporated herein by reference in their entireties as a part of the present application.

### TECHNICAL FIELD

The present disclosure relates to the technical field of automatic cleaning maintenance stations, and in particular to an automatic water change assembly, an automatic cleaning maintenance station, a float supporting apparatus, a clean water tank and a cleaning device.

### BACKGROUND

In recent years, automatic cleaning devices, with their popularization, have more and more functions, and particularly, the automatic cleaning devices that integrate sweeping, dust suction, mopping, dust removal, mop cloth cleaning and other functions have been applied more and more extensively. In addition, with the development of science and technology and social progress, more and more families use self-moving cleaning devices such as floor scrubbers and floor sweepers instead of traditional mops for floor mopping and scrubbing.

### SUMMARY

An objective of the present disclosure is to provide an automatic water change assembly, an automatic cleaning maintenance station, a float supporting apparatus, a clean water tank and a cleaning device.

Implementation solutions of the automatic water change assembly and the automatic cleaning maintenance station are described as below.

Embodiments of the present disclosure provide an automatic water change assembly, including: a control apparatus and a water tank assembly, wherein the control apparatus is arranged inside the water tank assembly and configured to automatically add clean water to the water tank assembly;
the water tank assembly includes:
a clean-water tank body;
a water inlet pipe configured to add clean water to the clean-water tank body; and
a float valve arranged inside the clean-water tank body and configured to move vertically with a change of a water level in the clean-water tank body;
the control apparatus controls the water inlet pipe to stop adding clean water to the clean-water tank body in response to the float valve being located at a first position, and
the float valve blocks, in response to the float valve being located at a second position, an outlet of the water inlet pipe through which water is added to the clear-water tank body.

In some embodiments, the float valve includes:
a pivot rod, including:
a first end portion pivotally connected to a fixed rotating shaft, and
a second end portion arranged opposite to the first end portion; and
a float portion connected to the second end portion and configured to rotate relative to the first end portion of the pivot rod with rising of the water level in the clean-water tank body until the float valve is located at the first position.

In some embodiments, in response to the float valve being located at the first position and the water level of the clean-water tank body rising continuously, the float portion drives the pivot rod to rotate relative to the fixed rotating shaft until the float valve is located at the second position.

In some embodiments, the float valve further includes:
a plug body movably connected to the first end portion of the pivot rod and configured to move toward or away from the outlet of the water inlet pipe under pushing of the first end portion of the pivot rod to block or unblock the outlet of the water inlet pipe.

In some embodiments, the plug body includes a cavity, the cavity including a downward opening; and
the first end portion of the pivot rod includes a push rod, the push rod being capable of freely and movably extending into the cavity and configured to push, with rotation of the pivot rod, two opposite side walls of the cavity such that the plug body moves toward or away from the outlet of the water inlet pipe.

In some embodiments, the water tank assembly further includes:
a fixed case accommodating the outlet of the water inlet pipe, the plug body and the first end portion of the pivot rod,
the first end portion of the pivot rod is connected between two opposite side walls of the fixed case by means of the fixed rotating shaft and configured such that the pivot rod is capable of rotating relative to the fixed case around the fixed rotating shaft.

In some embodiments, two inner side walls of the fixed case are provided with slide ways configured to be in sliding connection with the plug body.

In some embodiments, two sides of an outer side wall of the plug body are provided with slide rails, and the slide rails cooperate with the slide ways to realize sliding connection.

In some embodiments, the plug body further includes:
a soft rubber pad arranged on an end surface abutting against the outlet of the water inlet pipe and configured to block or unblock the outlet of the water inlet pipe in response to the plug body moving toward or away from the outlet of the water inlet pipe.

In some embodiments, the outlet of the water inlet pipe is of a conical structure.

In some embodiments, an overflow hole is formed at a top of the clean-water tank body and communicated with the outside by means of an overflow pipe.

In some embodiments, the automatic water change assembly further includes:
a signal transmitting component configured to transmit a sensing signal; and
a signal sensing component configured to receive the sensing signal, wherein
one of the signal transmitting component and the signal sensing component is arranged inside the float portion, and the other of the signal transmitting component and the signal sensing component is arranged on a side wall of the clean-water tank body; and
the signal sensing component is triggered in response to the float portion moving to cause the float valve to be located at the first position, such that the control apparatus controls the water inlet pipe to stop adding clean water to the clean-water tank body.

In some embodiments, the signal transmitting component includes a magnet, and the signal sensing component includes a Hall element.

In some embodiments, the automatic water change assembly further includes a float supporting apparatus, wherein the float supporting apparatus is applied to the water tank assembly and includes a supporting main body;
a sealing element is arranged on a periphery of the supporting main body; and
the sealing element includes a first sealing body and a second sealing body connected to the first sealing body, the first sealing body being capable of extending into an assembly hole of the clean-water tank body to block a gap between an outer wall of the supporting main body and an inner wall of the assembly hole; and
the second sealing body being capable of fitting an inner side edge of the assembly hole to block the inner side edge of the assembly hole.

In some embodiments, the first sealing body includes a connecting body fitted over the supporting main body, and at least one sealing ring capable of being in interference fit with the assembly hole being arranged on the connecting body in an axial direction.

In some embodiments, the sealing ring and the connecting body are integrally molded.

In some embodiments, the second sealing body and the first sealing body are integrally molded.

In some embodiments, the supporting main body is also provided with a detachable connector detachably connected to the water tank body.

In some embodiments, the detachable connector includes at least one connecting boss and at least one first bolt, the connecting boss being provided with a first screw hole capable of being in threaded connection with the first bolt.

In some embodiments, the supporting main body includes a water inlet pipeline and a float supporting frame, the float supporting frame being provided with a first cavity for accommodating a float, and the water inlet pipeline being communicated with the first cavity.

Embodiments of the present disclosure also provide an automatic cleaning maintenance station, including a water storage chamber configured to accommodate the automatic water change assembly according to the above embodiments.

Embodiments of the present disclosure also provide a clean water tank, including a water tank body and the float supporting apparatus as described above. The main body is provided with the water tank body, a wall of the water tank body is provided with an assembly hole, and the float supporting apparatus is mounted in the assembly hole. The first sealing body of the float supporting apparatus is located inside the assembly hole to block the gap between the outer wall of the supporting main body and the inner wall of the assembly hole. The second sealing body of the float supporting apparatus fits an inner side edge of the assembly hole to block the inner side edge of the assembly hole.

In some embodiments, an inner wall of the water tank body is provided with a mounting portion, the mounting portion is provided with a second screw hole, and the first bolt of the float supporting apparatus is in threaded connection with the first screw hole in a first boss of the float supporting apparatus and the second screw hole, such that the float supporting apparatus is detachably connected to the water tank body.

Embodiments of the present disclosure provide a cleaning device, including a main body and the clean water tank as described above, the clean water tank being arranged on the main body.

### BRIEF DESCRIPTION OF THE DRAWINGS

The accompanying drawings, which are incorporated in and constitute a part of the Description, illustrate embodiments consistent with the present disclosure and, together with the Description, serve to explain the principles of the present disclosure. Apparently, the accompanying drawings in the following descriptions show merely some embodiments of the present disclosure, and those of ordinary skill in the art may still derive other drawings from these accompanying drawings without any creative efforts. In the drawings:
FIG. 1 is a schematic diagram of an integral structure of an automatic cleaning maintenance station according to some embodiments of the present disclosure;
FIG. 2 is a schematic diagram of a main body structure of the automatic cleaning maintenance station according to some embodiments of the present disclosure;
FIG. 3 is a schematic diagram of a stereoscopic structure of an automatic water change assembly according to some embodiments of the present disclosure;
FIG. 4 is a schematic bottom view of the automatic water change assembly according to some embodiments of the present disclosure;
FIG. 5 is a schematic structural diagram of the automatic water change assembly, viewed from the front, according to some embodiments of the present disclosure;
FIG. 6 is a structural block diagram of the automatic water change assembly according to some embodiments of the present disclosure;
FIG. 7 is a schematic diagram of an internal structure of a main control box according to some embodiments of the present disclosure;
FIG. 8 is a schematic diagram of a stereoscopic structure of the main control box according to some embodiments of the present disclosure;
FIG. 9 is a schematic diagram of a sectional structure of the main control box according to some embodiments of the present disclosure;
FIG. 10 is a schematic structural diagram of an airbag according to some embodiments of the present disclosure;
FIG. 11 is a schematic structural diagram of an assembly part according to some embodiments of the present disclosure;
FIG. 12 is a sequence diagram for determining rupture of a water pipe according to some embodiments of the present disclosure;
FIG. 13 is a schematic structural diagram of a top shell of the automatic water change assembly according to some embodiments of the present disclosure;
FIG. 14 is a sectional view of a clean water tank according to some embodiments of the present disclosure;
FIG. 15 is a schematic diagram of sectional structures of the clean water tank and a float valve according to some embodiments of the present disclosure;
FIG. 16 is a schematic diagram of an integral structure of the float valve according to some embodiments of the present disclosure;
FIG. 17 is a schematic structural diagram showing that the float valve blocks a water passage according to some embodiments of the present disclosure;
FIG. 18 is a schematic structural diagram of a plug body according to some embodiments of the present disclosure;
FIG. 19 is a schematic structural diagram of a fixed case according to some embodiments of the present disclosure;
FIG. 20 is a schematic structural diagram of a sewage tank according to some embodiments of the present disclosure;
FIG. 21 is a stereoscopic diagram of a self-moving device according to an embodiment of the present disclosure;
FIG. 22 is a bottom view of FIG. 21;
FIG. 23 is a stereoscopic diagram of a wet cleaning system according to an embodiment of the present disclosure;
FIG. 24 is a diagram of an integral structure of a clean water tank according to an embodiment of the present disclosure;
FIG. 25 is an exploded view of FIG. 24;
FIG. 26 is a structural diagram showing that a cover body and a float supporting apparatus are assembled together according to an embodiment of the present disclosure;
FIG. 27 is a structural diagram of the cover body according to an embodiment of the present disclosure;
FIG. 28 is a structural diagram of the float supporting apparatus according to an embodiment of the present disclosure; and
FIG. 29 is a diagram of a usage state of the float supporting apparatus according to an embodiment of the present disclosure.

### Reference numerals in the drawings:

1000-automatic cleaning maintenance station bottom plate;
2000-automatic cleaning maintenance station body, 2100-dust collection chamber, 2300-sewage chamber, 2400-clean water chamber, 2600-boss, 2610-air pump port, 2620-sewage tank connecting port, 2630-clean-water tank connecting port, 2640-soft rubber bump, 2700-water storage chamber, 2710-separator plate, and 2800-dust collection hood;
4000-clean water tank, 4100-clean-water tank body, 4120-clean-water floating ball, 4130-cleaning liquid channel, 4140-cleaning-liquid channel cover, 4200-cleaning-liquid tank body, 4210-cleaning-liquid floating ball base, 4220-cleaning-liquid floating ball, 4340-second electromagnetic valve, 4110-full-water detecting sensor, 4300-clean-water tank top cover, 4310-groove, 4320-peristaltic pump, 4321-liquid inlet, 4322-liquid outlet, 4323-first liquid delivery pipe, 4324-second liquid delivery pipe, 4400-float valve, 4410- pivot rod, 4411-first end portion, 44111-push rod, 4412-second end portion, 4420-float portion, 4430-fixed rotating shaft, 4440-fixed case, 4441-slide way, 4450-plug body, 4451-soft rubber pad, 4452-cavity, 4453-slide rail, 4500-signal transmitting component, and 4600-signal sensing component;
5000-sewage tank, 5100-sewage tank body, 5200-drainage pump, 5300-drainage pipe, 5400-drain valve, 5500-full-sewage detecting assembly, 5510-full-sewage float seat, and 5520-full-sewage float portion;
6000-body base, and 6200-washing tank;
7000-automatic water change assembly, 7100-control apparatus, 7200-water tank assembly, 7210-second electromagnetic valve, 7300-water tank top shell, 7310-water inlet, 7320-overflow port, 7330-drainage port, 7400-recessed portion, 7410-clean water port, 7420-air pump interface, 7440-sewage inlet, 7600-first recess, 7700-second recess, and 7800-U-shaped wrapping structure;
8000-main control box, 8100-first electromagnetic valve, 8200-low-pressure switch, 8300-high-pressure switch, 8400-box body, 8410-box body water outlet, 8420-box body top cover, 8500-main controller, 8600-pressure-maintaining airbag box, 8610-pressure-maintaining airbag box housing, 8611-opening, 8620-airbag, 8621-airbag body, 8622-airbag neck portion, 8623-airbag end portion, 8624-airbag port, 8630-assembly part, 8631-central hole, 8632-recessed surface, 8633-edge portion, and 8700-four-way pipe;
9000-second external water pipe, 9100-first water pipe, 9200-second water pipe, 9300-third water pipe, 9400-clean-water tank water inlet pipe, 9410-outlet, 9420-threaded rubber pad, 9500-clean-water tank overflow pipe, and 9600-sewage tank drainage pipe; and
10-sweeping robot, 110-robot body, 111-forward portion, 112-rearward portion, 120-perception module, 121 position determination sensor, 122-front collision structure, 123-cliff sensor, 130-human-machine interaction module, 140-left wheel, 141-right wheel, 142-driven wheel, 150-cleaning system, 151-dry cleaning system, 152-side brush, 153-wet cleaning system, 1531-cleaning head, 1532-driving unit, 1533-driving platform, 1534-supporting platform, 20-water tank body, 201-cover body, 2011-mounting portion, 2012-second screw hole, 30-float supporting apparatus, 301-supporting main body, 3011-float supporting frame, 3012-water inlet pipeline, 3013-first cavity, 302-sealing element, 3021-first sealing body, 30211-sealing ring, 30212-connecting body, 3022-second sealing body, 303-detachable connector, 3031-first screw hole, 3032-first bolt, 3033-connecting boss, 40-assembly hole, and 50-float.

### DETAILED DESCRIPTION

For clearer descriptions of the objectives, technical solutions and advantages of the present disclosure, the present disclosure will be described in further detail with reference to the accompanying drawings. Apparently, the described embodiments are only part of, rather than all of the embodiments of the present disclosure. Based on the embodiments of the present disclosure, all other embodiments obtained by those of ordinary skill in the art without any creative efforts shall fall within the scope of protection of the present disclosure.

The terms used in the embodiments of the present disclosure are only intended to describe specific embodiments rather than to limit the present disclosure. The singular forms "a"/"an", "said" and "the" used in the embodiments and the appended claims of the present disclosure are also intended to include the plural forms, and the term "a plurality of" generally means at least two, unless otherwise indicated clearly in the context.

It should be understood that the term "and/or" used herein merely describes an association relationship of associated objects and indicates the existence of three types of relationships. For example, A and/or B, can indicate: A exists alone, A and B exist concurrently, and B exists alone. In addition, the character "/" herein generally indicates that contextual objects are in an "OR" relationship.

It should be understood that although the terms first, second, third, etc. may be used for description in the embodiments of the present disclosure, these should not be limited to these terms. These terms are only used for distinguishing. For example, without departing from the scope of the present disclosure, first may also be referred to as second, and similarly, second may also be referred to as first.

It should be noted that the term "comprise", "include" or any other variants thereof are intended to cover a non-exclusive inclusion, such that an article or apparatus that includes a series of elements includes not only those elements but also other elements that are not specifically listed, or further includes elements that are inherent to such an article or apparatus. Without more limitations, an element that is defined by the phrase "including a/an ..." does not exclude the presence of additional same elements in the article or apparatus that includes the element.

Alternative embodiments of the present disclosure will be described in detail below with reference to the accompanying drawings.

In the related art, an automatic cleaning maintenance station is often of a complex structure, in which a water tank is placed in a complex cover of the automatic cleaning maintenance station, such that it is necessary to manually add clean water or manually remove sewage. Since clean water needs to be manually added to a clean water tank, the cleaning efficiency is reduced; and since sewage needs to be manually discharged from a sewage tank, the risk of sewage overflow is increased while the cleaning efficiency is reduced, resulting in inconvenience in application. Moreover, the appearance and the structure of the water tank are too messy and are neither neat nor attractive enough. In addition, a connecting port of the water tank is placed at the bottom of the water tank, such that water in the water tank is prone to overflow, and devices in the automatic cleaning maintenance station may be damaged very easily.

Therefore, embodiments of the present disclosure provide an automatic water change assembly, including a water tank top shell, a sewage tank and a clean water tank which are of an integrated structure. Clean water can be automatically added to, sewage can be automatically discharged from or a cleaning liquid can be automatically added to water tank assembly, which saves manpower and enables automatic adding of clean water after the clean water tank is short of water, thereby improving the cleaning efficiency. Sewage is automatically pumped after the sewage tank is full, such that the risk of sewage outflow is reduced while the cleaning efficiency is improved. Moreover, the automatic water change assembly of the integrated structure has a more concise and attractive appearance.

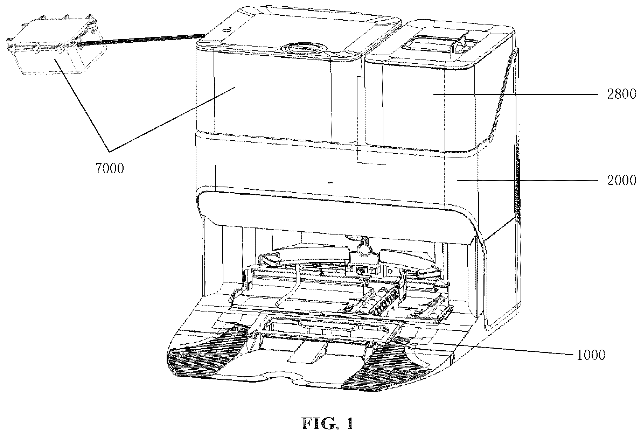

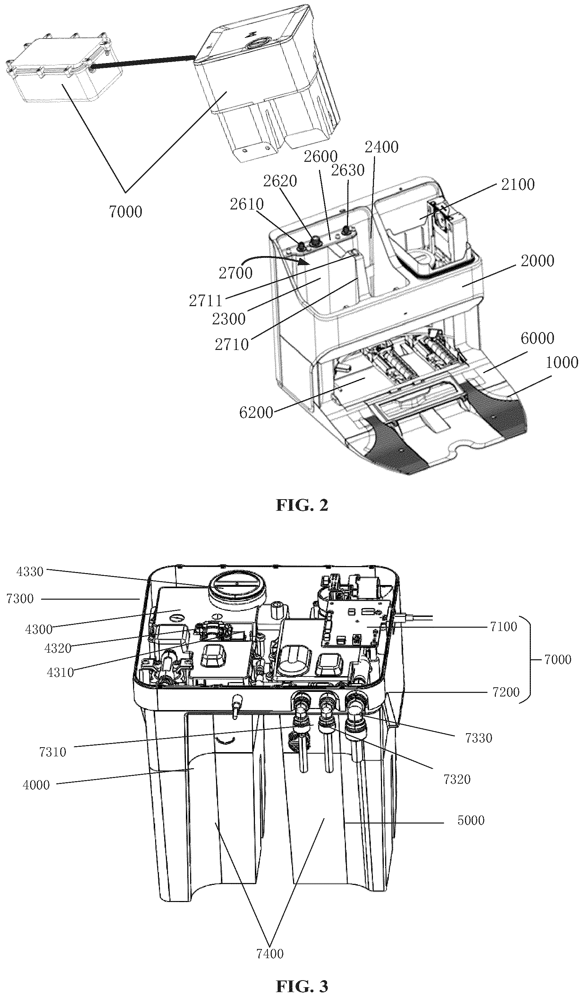

Specifically, the automatic water change assembly provided by the embodiments of the present disclosure is assembled in an automatic cleaning maintenance station. As an example, FIG. 1 exemplarily shows a schematic diagram of an integral structure formed by completely assembling the automatic water change assembly and the automatic cleaning maintenance station, and FIG. 2 exemplarily shows a schematic diagram of a split structure of the automatic water change assembly and the automatic cleaning maintenance station.

In order to describe the structure of the automatic water change assembly more clearly, the following directions are defined with reference to the automatic cleaning maintenance station: the automatic cleaning maintenance station may be calibrated by the following three perpendicular axes defined: a transverse axis Y, a front-rear axis X and a central vertical axis Z. A direction opposite to a direction pointed by an arrow along the front-rear axis X, i.e., a direction in which an automatic cleaning device enters the automatic cleaning maintenance station, is designated as "rearward", and a direction pointed by the arrow along the front-rear axis X, i.e., a direction in which the automatic cleaning device leaves the automatic cleaning maintenance station is designated as "forward". The transverse axis Y is essentially in a width direction of an automatic cleaning maintenance station body. The vertical axis Z is in a direction extending upwards along a bottom surface of the automatic cleaning maintenance station. The direction of the automatic water change assembly is described by XYZ in a normal application state. As shown in FIG. 1, a direction in which an automatic cleaning maintenance station bottom plate protrudes from the automatic cleaning maintenance station body is forward, a direction facing a rear wall of the automatic cleaning maintenance station body is rearward, the automatic water change assembly 7000 is located on a right side of the automatic cleaning maintenance station, and a dust collection chamber 2100 is located on a left side of the automatic cleaning maintenance station.

As shown in FIG. 1, the automatic cleaning maintenance station provided by this embodiment includes an automatic cleaning maintenance station bottom plate 1000, an automatic cleaning maintenance station body 2000, and the automatic water change assembly 7000 and a dust collection hood 2800 that are arranged on the automatic cleaning maintenance station body 2000. The automatic cleaning maintenance station bottom plate 1000 and the automatic cleaning maintenance station body 2000 are in detachable or non-detachable connection, which makes it convenient to transport and maintain the automatic cleaning maintenance station bottom plate 1000 and the automatic cleaning maintenance station body 2000. A lower portion of the automatic cleaning maintenance station body 2000 and a body base 6000 together form a washing chamber with a forward opening, and the washing chamber is configured to accommodate the automatic cleaning device when the automatic cleaning device returns to the automatic cleaning maintenance station for a maintenance operation. The body base 6000 of the automatic cleaning maintenance station is provided with a washing tank 6200, which is configured to clean cleaning components on the automatic cleaning device after the automatic cleaning device is adapted to the washing chamber.

As shown in FIG. 2, the automatic cleaning maintenance station body 2000 includes a water storage chamber 2700 and the dust collection chamber 2100. The water storage chamber 2700 is arranged at the top of the automatic cleaning maintenance station body 2000 in such a way that its opening faces upwards and forwards. The water storage chamber includes a clean water chamber 2400 for accommodating a clean water tank of the automatic water change assembly 7000 and a sewage chamber 2300. The dust collection chamber 2100 and the water storage chamber 2700 are arranged at the top end of the automatic cleaning maintenance station body 2000 side by side in such a way that an opening of the dust collection chamber 2100 faces upwards and forwards. The upward and forward designs of the water storage chamber 2700 and the dust collection chamber 2100 facilitate mounting and dismounting of the automatic water change assembly 7000 and the dust collection hood 2800. Both of the automatic water change assembly 7000 and the dust collection hood 2800 are assembled on the automatic cleaning maintenance station body 2000 from the upper front side. Such a structural design conforms to users' usage habits. In addition, the upward and forward design facilitates routine maintenance of devices in the water storage chamber 2700 and the dust collection chamber 2100.

As shown in FIG. 2, the water storage chamber 2700 and the dust collection chamber 2100 are defined by a rear wall, a front wall and a plurality of side walls of the automatic cleaning maintenance station body 2000. The water storage chamber 2700 and the dust collection chamber 2100 are coplanar in rear wall, front wall and one side wall. The height of the rear wall of the automatic cleaning maintenance station body 2000 is greater than that of the front wall of the automatic cleaning maintenance station body 2000. The side walls of the automatic cleaning maintenance station body 2000 connect the rear wall and the front wall. End surfaces of the side walls of the automatic cleaning maintenance station body 2000 are of arc-shaped structures. The upward and forward designs of the water storage chamber 2700 and the dust collection chamber 2100 facilitate mounting and dismounting of the clean water tank of the automatic water change assembly 7000 and the dust collection hood 2800. The arc-shaped structures ensure the stability and the attractive appearance of the automatic water change assembly 7000 and the dust collection hood 2800 mounted in the water storage chamber 2700 and the dust collection chamber 2100 respectively.

The water storage chamber 2700 is configured to accommodate the automatic water change assembly 7000 (including a sewage tank 5000 and a clean water tank 4000). The water storage chamber 2700 includes a boss 2600 fitting the rear wall of the water storage chamber 2700 and extending upwards along the bottom of the water storage chamber 2700 to a height slightly less than the height of the rear wall of the water storage chamber. An upper portion of the boss is provided with a plurality of raised openings, the raised openings may be made of but not limited to soft rubber, and the raised opening is configured to be connected to the sewage tank 5000 or the clean water tank 4000 assembled at a corresponding position. The water storage chamber 2700 includes a vertically extending separator plate 2710 dividing the water storage chamber 2700 into two parts, one part being the sewage chamber 2300 for accommodating the sewage tank 5000, and the other part being the clean water chamber 2400 for accommodating the clean water tank 4000. It should be noted that the upper portion of the boss may be a top of the boss, or a side wall of the boss higher than the highest water level of the clean water tank and the sewage tank in an assembled state, which is not limited herein.

In some embodiments, the raised openings include an air pump port 2610 and a sewage tank connecting port 2620 which are correspondingly arranged at the top end of the boss 2600 at an assembly position of the sewage tank 5000. An air pump extracts air from the sewage tank 5000 through the air pump port 2610, and the sewage tank 5000 is of a closed structure, such that a negative pressure is formed inside the sewage tank 5000 in the air extraction process, and sewage in the washing tank is pumped into the sewage tank 5000 through a sewage pipe and the sewage tank connecting port 2620. A clean-water tank connecting port 2630 is correspondingly arranged at the top end of the boss 2600 at an assembly position of the clean water tank 4000. Clean water in the clean water tank 4000 flows onto a scraping part in the washing tank through the clean-water tank connecting port 2630 under the action of a peristaltic pump to clean a cleaning head of the automatic cleaning device. The air pump port 2610, the sewage tank connecting port 2620, and the clean-water tank connecting port 2630 are arranged at the top end of the boss 2600, which prevents water in the clean water tank or the sewage tank from overflowing and flowing into the clean water chamber or the sewage chamber during replacement of the clean water tank or the sewage tank. Compared with the connection at the bottom end of the clean water chamber or the sewage chamber, the sealed connection between the sewage tank 5000 and the air pump port 2610 and the sewage tank connecting port 2620 as well as between the clean water tank 4000 and the clean-water tank connecting port 2630 at the top end is more convenient in operation.

In some embodiments, the automatic water change assembly 7000 includes a control apparatus 7100 and a water tank assembly 7200. The control apparatus 7100 is arranged inside the water tank assembly 7200. The control apparatus 7100 includes a circuit board and electronic components arranged on the circuit board, and the electronic components are electrically connected to electromagnetic valves, float valves and various sensors in the automatic water change assembly 7000 and configured to automatically add clean water to, automatically discharge sewage from or automatically add a cleaning liquid to the water tank assembly 7200. The water tank assembly 7200 includes the sewage tank 5000, the clean water tank 4000 and a water tank top shell 7300. The water tank top shell substantially covers the sewage tank and the clean water tank. A rear side of the water tank top shell 7300 protrudes from the water tank assembly 7200, such that the water tank assembly 7200 substantially forms an L-shaped structure. The sewage tank 5000 and the clean water tank 4000 extend into the water tank top shell 7300. The water tank top shell, the sewage tank and the clean water tank form an integrated structure, which makes the appearance of the water tank more neat and attractive.

As shown in FIG. 3, the sewage tank 5000 and the clean water tank 4000 are arranged below the water tank top shell 7300 at a preset distance. The sewage tank 5000 is inserted into the sewage chamber 2300, the clean water tank 4000 is inserted into the clean water chamber 2400, and the separator plate 2710 is inserted into the space between the sewage tank 5000 and the clean water tank 4000, such that the automatic water change assembly 7000 is more stable.

Outer walls on the same sides of the sewage tank 5000 and the clean water tank 4000 are provided with inwardly-formed recessed portions 7400, and top ends of the recessed portions 7400 are provided with a sewage port and a clean water port respectively arranged upwards in a running-through manner. The sewage port is configured to pump sewage into the sewage tank 5000, and the clean water port is configured to pump clean water out of the clean water tank 4000. Specifically, the recessed portions 7400 cooperate with at least a part of the boss 2600 for limiting. Top surfaces of the recessed portions 7400 may be provided with the clean water port, the sewage port or a limiting pit, which is connected, in a matching manner, to the air pump port 2610, the sewage tank connecting port 2620, the clean-water tank connecting port 2630 or a soft rubber bump 2640 arranged on the boss 2600. The automatic water change assembly 7000 is relatively accurately arranged at a corresponding position of the water storage chamber 2700 through overall limiting of the limiting pit and the soft rubber bump 2640, so as to prevent the automatic water change assembly 7000 from position offset.

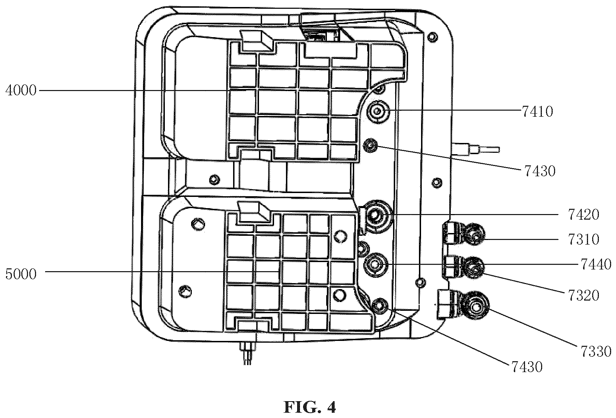

Specifically, as shown in FIG. 4, for the clean water tank 4000, the top surface of the recessed portion 7400 is provided with a clean water port 7410. When the clean water tank 4000 is assembled inside the water storage chamber 2700, the recessed portion 7400 of the water tank is exactly received by the boss 2600 in the water storage chamber 2700, and the clean water port 7410 of the water tank is connected to the raised opening at the top of the boss 2600.

For the sewage tank 5000, the top surface of the recessed portion 7400 is provided with an air pump interface 7420 and a sewage inlet 7440, and the air pump interface 7420 is connected to the air pump connecting port 2610 at the top end of the boss 2600. Sewage can be sucked into the sewage tank 5000 after the air pump connecting port 2610 is connected to the air pump interface 7420. In some embodiments, the air pump extracts air from the sewage tank 5000 by means of the air pump connecting port 2610 and the air pump interface 7420, and the sewage tank 5000 is of a closed structure, such that a negative pressure is formed inside the sewage tank 5000 in the air extraction process, and sewage in the washing tank is pumped into the sewage tank 5000 by means of a sewage pipe, the sewage inlet 7440 and the sewage tank connecting port 2620.

The top surface of the recessed portion 7400 may also be provided with a plurality of pits 7430. The top surface of the recessed portion 7400 is exactly received by the boss 2600 in the water storage chamber 2700 when the automatic water change assembly 7000 is assembled in the water storage chamber 2700. The plurality of pits arranged on the top surface of the recessed portion 7400 cooperate with the soft rubber bumps at the top of the boss 2600, such that the automatic water change assembly 7000 is limited. Through cooperative limiting by the soft rubber bumps 2640 and the pits, the automatic water change assembly 7000 may be at a more accurate position inside the water storage chamber 2700, preventing the automatic water change assembly 7000 from position offset.

A rear side of the water tank top shell 7300 includes a water inlet 7310, the water inlet 7310 is connected to the clean water tank 4000 by means of a water pipe, and clean water is automatically added to the clean water tank 4000 by the control apparatus 7100. The rear side of the water tank top shell 7300 further includes an overflow port 7320, and the overflow port 7320 is connected to the clean water tank 4000 by means of a water pipe. Water in the clean water tank is automatically discharged through the overflow port 7320 after the clean water tank 4000 is full of water, such that clean water is prevented from flowing into the automatic water change assembly 7000 and damaging devices. The rear side of the water tank top shell further includes a drainage port 7330, and the drainage port is connected to the sewage tank by means of a water pipe. Water in the sewage tank is automatically discharged through the drainage port after the sewage tank is full of water, such that sewage is prevented from flowing into the automatic water change assembly 7000 and damaging devices.

An outer side wall of at least one of the sewage tank 5000 and the clean water tank 4000 is provided with a sensor 7500 configured to detect whether the sewage tank 5000 or the clean water tank 4000 is assembled at a preset position. When the sewage tank 5000 or the clean water tank 4000 is not assembled in place, the automatic water change assembly 7000 may give an alarm, for example, an indicator lamp may be on.

The water tank top shell 7300 includes a detachable water tank top cover 7340. The top ends of the sewage tank 5000 and the clean water tank 4000 extend into the water tank top shell. The devices in the water tank top shell 7300 can be maintained after the water tank top cover 7340 is opened. The water tank top cover 7340 is provided with a signal lamp, such as a water pipe leakage signal lamp, a water pipe rupture signal lamp, a normal water-replenishing signal lamp and the like.

A side wall of the water tank top shell 7300 extends downwards along the side walls of the sewage tank 5000 and the clean water tank 4000 to form a U-shaped wrapping structure 7800. The U-shaped wrapping structure 7800 wraps the side walls of the sewage tank 5000 and the clean water tank 4000, and for example, wraps at least part of front side walls and left and right side walls of the sewage tank 5000 and the clean water tank 4000, such that only the U-shaped wrapping structure is exposed outside after the automatic water change assembly 7000 is assembled at the top end of the automatic cleaning maintenance station, which, as shown in FIG. 1, improves the overall appearance and neatness of the automatic cleaning maintenance station.

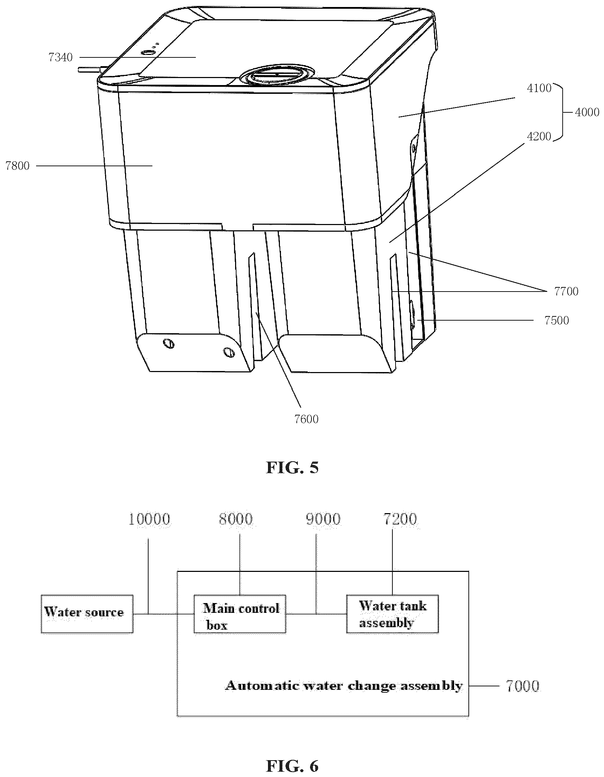

As shown in FIG. 5, a side wall of the sewage tank 5000 includes at least one first recess 7600 extending upwards along a bottom of the sewage tank, a side wall of the clean water tank 4000 includes at least one second recess 7700 extending upwards along a bottom of the clean water tank, and the first recess 7600 and the second recess 7700 are configured for limiting at assembly positions of the sewage tank 5000 and the clean water tank 4000 respectively. The sewage tank and the clean water tank are made of transparent materials, which makes it convenient to observe the liquid levels in the sewage tank and the clean water tank.

The clean water tank includes: a clean-water floating ball base arranged at a bottom of a clean-water tank body; and a clean-water floating ball connected to the clean-water floating ball base and configured to detect a water level, and when the water level is lower than a first preset threshold, the control apparatus controls a water inlet to be opened, so as to automatically add clean water to the clean water tank. The clean water tank further includes internally: a cleaning-liquid floating ball base arranged at a bottom of a cleaning-liquid tank body; and a cleaning-liquid floating ball connected to the cleaning-liquid floating ball base and configured to detect a liquid level of a cleaning liquid, and when the liquid level is higher than a second preset threshold, the cleaning liquid is automatically added to the clean water tank through a peristaltic pump. The sewage tank includes: a sewage floating ball arranged at a top of the sewage tank and configured to detect a liquid level of sewage, and when the liquid level is higher than a third preset threshold, a sewage pump and a drain valve are opened successively to automatically discharge sewage from the sewage tank through a drainage port.

The automatic water change assembly 7000 and the dust collection hood 2800 are arranged at the top end of the automatic cleaning maintenance station side by side to form a flat arrangement structure, which, in one aspect, makes it convenient to mount and dismount for use, and in another aspect, is neat and attractive in appearance and enhances the user experience.

After long-term use of the automatic cleaning maintenance station, the raised openings may inevitably be contaminated by sewage obtained by cleaning the cleaning components and thus have stains. Through the above arrangement, the raised openings on the boss 2600 are of an open structure relative to the front wall and even relative to the side wall, such that an arm or a cleaning tool may be in contact with the raised openings from various angles, which makes it convenient for a user to clean up dirt accumulated near the raised openings.

When the automatic water change assembly 7000 is assembled inside the water storage chamber, the top surface of the automatic water change assembly 7000 is higher than the rear wall of the automatic cleaning maintenance station body, and a part of a tank body of the automatic water change assembly 7000 is located outside the water storage chamber. Through the above design, the material consumption of the automatic cleaning maintenance station body is reduced, and the technical effect of a beautiful design is also achieved. Meanwhile, the top of the automatic cleaning maintenance station body is designed to have a low front wall and a high rear wall, and the upper front positions of the automatic water change assembly 7000 and the dust collecting hood 2800 are also exposed outside chambers, making it convenient for people to observe the water levels in the transparent sewage tank and clean water tank and the situation in the dust collection chamber, and to perform corresponding operations on the sewage tank, the clean water tank and the dust collection chamber punctually.

In the related art, since the clean water tank and the sewage tank of the automatic cleaning maintenance station are placed on the automatic cleaning maintenance station, it is often necessary to manually add clean water, and clean water is manually added after the clean water tank is short of water, which reduces the cleaning efficiency.

Therefore, embodiments of the present disclosure also provide an automatic water change assembly capable of achieving automatic adding of clean water, such that manpower is saved, and a clean water tank short of water can be automatically added with clean water, which improves the cleaning efficiency. Further, when the water pipe is ruptured or is leaking, a water source can be closed punctually, and an alarm can be given to avoid water leakage.

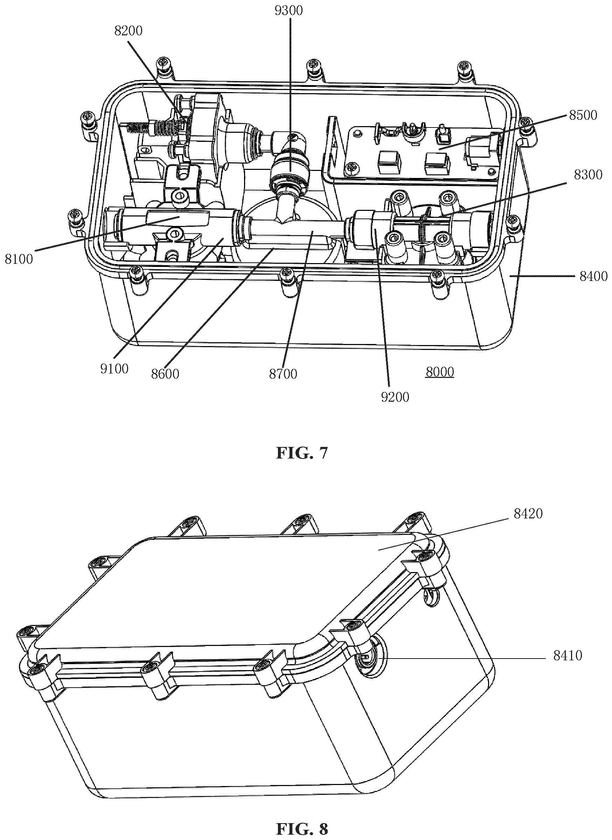

Specifically, the automatic water change assembly provided by the embodiments of the present disclosure is assembled in an automatic cleaning maintenance station. As an example, as shown in FIG. 6, the automatic water change assembly 7000 includes a main control box 8000 and a water tank assembly 7200. The main control box 8000 has one end connected to the outside of the water tank assembly 7200 by means of a second external water pipe 9000, and the other end connected to a water source by means of a first external water pipe 10000. The main control box 8000 is configured to at least achieve automatic adding of clean water to the water tank assembly. As shown in FIG. 7, the main control box 8000 includes a first electromagnetic valve 8100, a low-pressure switch 8200 and a high-pressure switch 8300. The low-pressure switch 8200 and the high-pressure switch 8300 are configured to generate corresponding triggering signals based on a water pressure state of the second external water pipe 9000. The first electromagnetic valve 8100 is opened or closed in response to the triggering signals to correspondingly control water in the water source to flow or not flow into the second external water pipe by means of the first external water pipe. The main control box 8000 may be reset once when the main control box 8000 is mounted for the first time, and in a reset state, the first electromagnetic valve 8100 is opened. At this time, a second electromagnetic valve on a side of the clean water tank is in a closed state, water at the water source flows into the main control box 8000 and the external water pipe and cannot be circulated, and an increase in the water pressure in the water pipe causes the high-pressure switch to generate a high-pressure triggering signal and to send the high-pressure triggering signal to a main controller 8500 in the main control box 8000. The main controller 8500 sends a closing control signal, and the first electromagnetic valve 8100 is closed in response to the high-pressure triggering signal, such that the water source stops feeding water and the whole water passage is kept filled with clean water.

As shown in FIG. 8, the main control box 8000 includes a box body 8400. The box body 8400 includes a box body water inlet (not shown) and a box body water outlet 8410, the box body water inlet is connected to the water source, and the box body water outlet 8410 is connected to the water tank assembly 7200 by means of the second external water pipe 9000. A box body top cover 8420 is arranged at top of the box body 8400, and fixedly connected to the top of the box body 8400 by means of bolts. The box body 8400 may be in the shape of a cuboid, a cube, a sphere, a hemisphere, etc., which is not limited thereto. The box body 8400 may be made of metal, alloy, hard plastic, rubber, etc., which is not limited thereto.

As shown in FIG. 7, the main control box 8000 further includes a main controller 8500. The main controller 8500 is arranged inside the box body 8400, the main controller 8500 is electrically connected to the first electromagnetic valve 8100, the low-pressure switch 8200 and the high-pressure switch 8300, and the main controller 8500 is configured to control, based on the triggering signals, the first electromagnetic valve 8100 to be opened or closed. A second electromagnetic valve 7210 is arranged on a side of the water tank assembly 7200. When the float valve in the clean water tank 4000 detects that the clean water tank is short of water, a detection signal is sent to the control apparatus 7100, and the control apparatus 7100 controls the second electromagnetic valve 7210 to be opened. At this time, water in the water pipe is injected into the clean water tank 4000, the water pressure in the water pipe decreases, and the low-pressure switch 8200 generates a low-pressure triggering signal, and sends the low-pressure triggering signal to the main controller 8500 in the main control box 8000. The main controller 8500 sends an opening control signal. The first electromagnetic valve 8100 is opened in response to the low-pressure triggering signal, and water at the water source enters from the box body water inlet to form a passage from the water source to the clean water tank, thereby achieving automatic adding of clean water to the water tank assembly. When a Hall sensor in the clean water tank 4000 detects that the clean water tank is full of water, a full-water detection signal is sent to the control apparatus 7100, and the control apparatus 7100 controls the second electromagnetic valve to be closed. At this time, water no longer flows into the clean water tank, and the water pressure in the water pipe increases, such that the high-pressure switch generates a high-pressure triggering signal and sends the high-pressure triggering signal to the main controller 8500 in the main control box 8000. The main controller 8500 sends a closing control signal. The first electromagnetic valve 8100 may be closed in response to the high-pressure triggering signal, and the water source stops feeding water, thereby stopping automatic adding of clean water to the water tank assembly. Under the control of the main control box, the operations of automatically adding clean water and automatically stopping adding clean water can be achieved according to the water level of the clean water tank, which saves labors and prevents a dust collection pile from stopping working due to shortage of water, thereby improving the operating efficiency of the automatic cleaning device.

As shown in FIG. 7, the main control box 8000 further includes: a first water pipe 9100 arranged inside the box body 8400, the first water pipe 9100 having one end connected to the box body water inlet and being connected to the water source by means of the box body water inlet; a second water pipe 9200 arranged inside the box body 8400 and having one end connected to the box body water outlet 8410 and the other end connected to the first water pipe 9100; and a third water pipe 9300 arranged inside the box body 8400 and connected between the first water pipe 9100 and the second water pipe 9200. The first electromagnetic valve 8100 is arranged in the pipeline of the first water pipe 9100, the high-pressure switch 8300 is arranged in the pipeline of the second water pipe 9200, and the low-pressure switch 8200 is arranged in the pipeline of the third water pipe. The high-pressure switch 8300 and the low-pressure switch 8200 are pressure sensors. By setting thresholds of the pressure sensors, the pressure sensors have the functions of the high-pressure switch and the low-pressure switch. For example, a low-pressure threshold of the pressure sensor is set such that the low-pressure switch generates a low-pressure triggering signal when the water pressure is lower than the low-pressure threshold, and a high-pressure threshold of the pressure sensor is set such that the high-pressure switch generates a high-pressure triggering signal when the water pressure is higher than the high-pressure threshold. The low-pressure threshold and high-pressure threshold are set according to experimental data, which is not limited herein. The high-pressure switch and the low-pressure switch may respond to different pressure values of a water flow in the water passage respectively, which in turn controls the first electromagnetic valve to be opened or closed, and finally achieves opening and closing of the water passage.

In some embodiments, the main control box 8000 further includes a pressure-maintaining airbag box 8600. A sufficient liquid is pre-stored in the pressure-maintaining airbag box 8600. The pressure-maintaining airbag box 8600 is configured to replenish the third water pipe 9300 and the second water pipe 9200 with the liquid in the pressure-maintaining airbag box when a liquid pressure in the second external water pipe 9000 decreases, to decrease reducing speeds of pressures in the third water pipe 9300 and the second water pipe 9200, thereby increasing a response time difference between the low-pressure switch and the high-pressure switch.

In some embodiments, as shown in FIG. 7, the main control box 8000 further includes a pressure-maintaining airbag box 8600 and a four-way pipe 8700. The pressure-maintaining airbag box 8600 includes an opening 8611, and the four-way pipe 8700 includes four communication interfaces connected to the first water pipe 9100, the second water pipe 9200, the third water pipe 9300 and the opening 8611 of the pressure-maintaining airbag box respectively. The pressure-maintaining airbag box 8600 is arranged among the first water pipe 9100, the second water pipe 9200 and the third water pipe 9300 by means of the four-way pipe 8700. The pressure-maintaining airbag box is in liquid communication with the first water pipe, the second water pipe and the third water pipe by means of the four-way pipe respectively, and is configured to replenish the first water pipe 9100, the second water pipe 9200 and the third water pipe 9300 with a liquid in the pressure-maintaining airbag box when liquid pressures in the first water pipe 9100, the second water pipe 9200 and the third water pipe 9300 decrease.

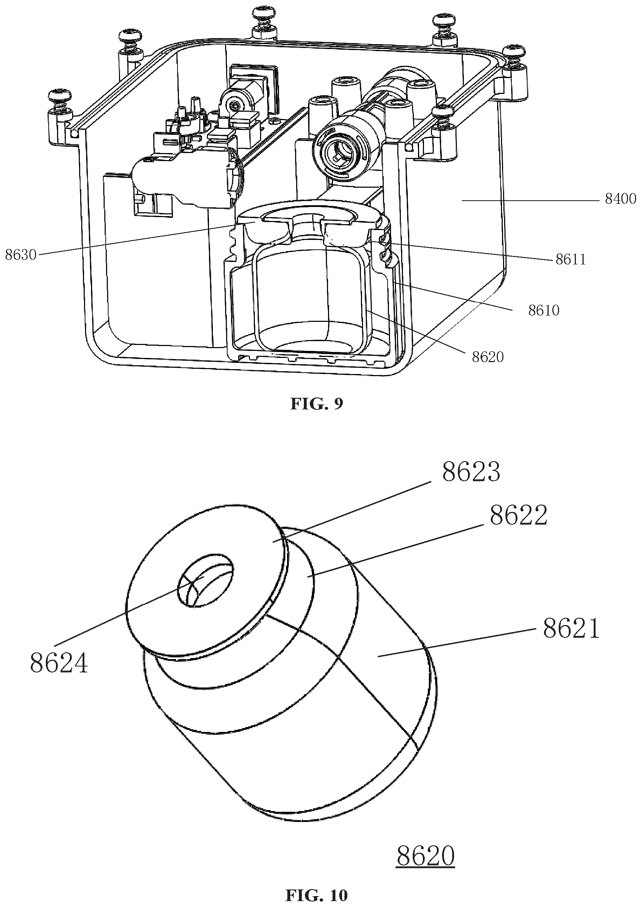

In some embodiments, as shown in FIG. 9, the pressure-maintaining airbag box 8600 includes a pressure-maintaining airbag box housing 8610, an airbag 8620 and an assembly part 8630. The airbag 8620 is assembled inside the pressure-maintaining airbag box housing 8610 by means of the assembly part 8630. The top end of the pressure-maintaining airbag box housing 8610 is provided with an opening 8611. The airbag 8620 is arranged inside the pressure-maintaining airbag box housing 8610 and configured to elastically expand and contract according to the amount of a liquid getting in and out of the airbag through the opening. The airbag 8620 is made of a flexible elastic material and can expand or contract according to the amount of the liquid getting in the airbag 8620. As shown in FIG. 10, the airbag 8620 includes an airbag body 8621, an airbag neck portion 8622, and an airbag end portion 8623. The airbag body 8621 is arranged inside the pressure-maintaining airbag box housing 8610 and configured to elastically expand and contract according to the amount of the liquid getting in and out of the airbag 8620. The airbag end portion 8622 is arranged at the top end of the airbag body 8621 and is substantially flush with the end portion of the pressure-maintaining airbag box. The airbag end portion 8623 has an airbag opening 8624 for the liquid to get in and out. The airbag neck portion 8622 is arranged between the airbag body 8621 and the airbag end portion 8623, and is in snap-fit with the assembly part 8630.

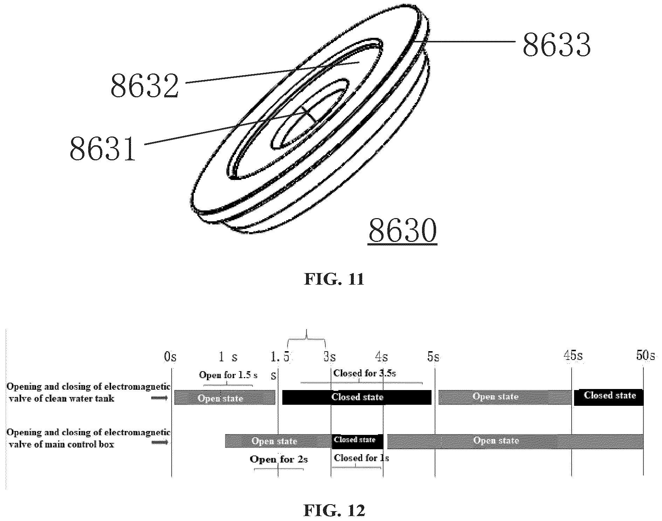

In some embodiments, as shown in FIG. 11, the assembly part 8630 includes a central hole 8631, and the airbag end portion 8623 is assembled at the opening of the pressure-maintaining airbag box housing 8610 after the assembly part 8630 is fitted over the airbag neck portion 8622 through the central hole 8631. An upper surface of the assembly part 8630 further includes a recessed surface 8632, the recessed surface 8632 is arranged on the top surface of the assembly part around the central hole 8631, and the recessed surface 8632 is configured to fit the airbag end portion 8623. The airbag end portion 8623 passes through the central hole 8631 and then fits the recessed surface 8632, such that the airbag end portion 8623 is substantially flush with the upper surface of the assembly part 8630. The assembly part 8630 further includes an edge portion 8633. The edge portion 8633 extends outwards around the top surface of the assembly part and is configured to be clamped with the periphery of the opening 8611 of the pressure-maintaining airbag box housing after the assembly part 8630 is assembled at the opening 8611 of the pressure-maintaining airbag box housing, thereby achieving internal sealing of the pressure-maintaining airbag box 8600. The pressure-maintaining airbag box further includes a cover body (not shown), and the cover body of the pressure-maintaining airbag box is assembled on the pressure-maintaining airbag box housing, and is configured to seal the airbag 8620 in the pressure-maintaining airbag box housing 8610 by pressing the edge portion 8633.

After the first reset, a control button of the main control box is first pressed after lines and pipelines of the water tank assembly and the main control box are well connected. At this time, the first electromagnetic valve of the main control box is opened for a period of time and then closed, for example, opened for 2 s. Both of the first electromagnetic valve and the second electromagnetic valve are closed, and the water passage between the first electromagnetic valve and the second electromagnetic valve is full of clean water. At this time, the water passage is in a high-pressure state, the high-pressure switch is in a continuous triggering state, and the first electromagnetic valve is also closed in response to the state of the high-pressure switch. When the external water pipe leaks the liquid slowly due to rupture, the water pressure in the external water pipe decreases slowly, and the continuous triggering state of the high-pressure switch is stopped. At this time, the liquid in the pressure-maintaining airbag box is replenished into the water passage due to contraction of the airbag, which decreases the reducing speed of the water pressure in the water passage. When the liquid in the pressure-maintaining airbag box cannot be replenished to the water passage, the water pressure in the water passage may continue to decrease with the leakage of the water pipe until the water pressure reaches a triggering threshold of the low-pressure switch. The main controller records a first time difference t1 between times when the triggering states of the high-pressure switch and the low-pressure switch change. When the first time difference t1 is within a first preset range, it is believed that the water pipe leaks, and a water pipe leakage alarm signal is sent out. The first preset range may be set according to experimental data, for example, more than 10 seconds. When t1 is more than 10 seconds, it is believed that the water pipe leaks, and a water pipe leakage alarm signal is sent out. For example, a water pipe leakage signal lamp lights up and/or a buzzer alarm is given.

In some embodiments, when the external water pipe leaks the liquid due to a rupture, if the rupture is not serious enough and the external water pipe is not in a slight leaking state, the water pressure in the external water pipe also decreases rapidly, and the continuous triggering state of the high-pressure switch is stopped. At this time, the liquid in the pressure-maintaining airbag box is replenished to the water passage due to the contraction of the airbag. Due to quick leakage of water in the external water pipe, the pressure-maintaining airbag box only decreases the reducing speed of the water pressure in the water passage within a short period of time. The water pressure in the water passage decreases rapidly with the rupture of the water pipe and reaches the triggering threshold of the low-pressure switch within a short period of time when the liquid in the pressure-maintaining airbag box cannot be replenished into the water passage. The main controller records a second time difference t2 between times when the high-pressure switch and the low-pressure switch are triggered. If the second time difference t2 is within a second preset range, it is believed that the water pipe is ruptured and a water pipe rapture alarm signal is sent out. For example, the second preset range may be set according to experimental data, for example, 3-10 seconds. When t2 is 3-10 seconds, it is believed that the water pipe is ruptured, and a water pipe rupture alarm signal is sent out. For example, a water pipe rupture signal lamp lights up and/or a buzzer alarm is given.

In some embodiments, when the second electromagnetic valve of the clean water tank is opened for normal water replenishment, the water pressure in the external water pipe decreases rapidly, and the continuous triggering state of the high-pressure switch is stopped. At this time, the liquid in the pressure-maintaining airbag box may be replenished into the water passage due to the contraction of the airbag. Since the speed of the water flow in the external water pipe is very high, the pressure-maintaining airbag box may only decrease the reducing speed of the water pressure in the water path in an instant. When the liquid in the pressure-maintaining airbag box cannot be replenished into the water passage, the water pressure in the water passage reaches the triggering threshold of the low-pressure switch within a very short period of time. The main controller records a third time difference t3 between times when the high-pressure switch and the low-pressure switch are triggered. If the third time difference t3 is within a third preset range, it is believed that water is replenished normally, an alarm signal is not sent out, and a normal water replenishing signal may be sent out. The third preset range may be set according to experimental data, for example, 0-3 seconds. When t3 is 0-3 seconds, it is believed that water is replenished normally, and a normal water replenishing signal may be sent out. For example, a normal water replenishing signal lamp is turned on, and the normal water replenishing signal lamp is turned off upon completion of water replenishment.

In some embodiments, when the external water pipe leaks the liquid quickly due to rupture, a time period during which the rupture of the water pipe results in serious leakage of the water flow approaches a triggering interval between times when the high-pressure switch and the low-pressure switch are triggered when the second electromagnetic valve is opened during normal water replenishment, and for example, is also within the third preset range, such that the main controller cannot determine whether water is replenished normally or the water pipe is ruptured. At this time, control can be carried out through the following control logic. The main control box is further configured to: cause the second electromagnetic valve to be closed within a first preset time period and the first electromagnetic valve to be closed within a second preset time period. The second preset time period at least partially overlaps the first preset time period. If the high-pressure switch is continuously triggered during a time period in which the second preset time period overlaps the first preset time period, it is determined that the water pipe is not ruptured. The expression "at least partially overlap" may mean that the second preset time period is a part of the first preset time period.

As shown in FIG. 12, the situation of detecting whether the water pipe is ruptured or not can be explained by the sequence diagram. When the water level of the clean water tank reaches a detection level of a Hall sensor, the second electromagnetic valve of the clean water tank is opened, for which the time is recorded as 0 second. Water in the pipeline may be released, the pressure in the pipeline reduces accordingly, the low-pressure switch is triggered, and the first electromagnetic valve is opened, for which the time is for example recorded as the first second. Water in a faucet is replenished into the pipeline, and then the second electromagnetic valve is closed, for which the time is for example recorded as the 1.5^{th} second. After a preset period of time, the first electromagnetic valve is closed, for which the time is for example recorded as the third second, that is, after the second electromagnetic valve is closed, the first electromagnetic valve is closed after water is continuously fed for 1.5 seconds. A high pressure is maintained in the pipeline during this period of time. That is, water is filled for a period of time, for example, 2 s, before each water replenishment, to detect whether a high-pressure state can be maintained in the pipeline. The first electromagnetic valve is closed for 1 second and then opened, for which the time is for example recorded as the fourth second. If the pipeline is not ruptured within 1 second in which both of the first electromagnetic valve and the second electromagnetic valve are closed, the high pressure is maintained in the pipeline, and if the pipeline is ruptured, the high pressure cannot be maintained in the pipeline. Therefore, if the high-pressure state can be reached during this period of time, it can be determined that the water pipe is not ruptured. Then, the second electromagnetic valve is opened at, for example, the 5^{th} second to start normal water replenishment, and is not closed until the clean water tank is full. This can avoid the problem that water leakage becomes more and more serious due to continuous water replenishment when the water pipe is ruptured.

According to the embodiments of the present disclosure, by adding the main control box, clean water can be automatically added to the clean water tank, which saves manpower and improves the cleaning efficiency. In addition, by adding the pressure-maintaining airbag box, whether the water pipe leaks or is ruptured can be determined punctually when the water pipe is ruptured or leaks, such that the water source can be closed punctually and an alarm can be given to avoid the risk of water leakage.

In the related art, in order to improve the cleaning effect, it is necessary to add a cleaning liquid to a clean water tank, for example, the cleaning liquid can be added manually. However, when clean water is automatically added to the clean water tank, it is often necessary to remind the user to manually add the cleaning fluid, such that the reminder cost is increased and the addition of the cleaning fluid is easily missed, which causes inconvenience to the application of the automatic cleaning device and reduces the cleaning efficiency.

Therefore, embodiments of the present disclosure also provide an automatic water change assembly capable of automatically adding clean water and automatically adding a cleaning liquid, such that the convenience in use by the user is improved, the clean water tank short of water can be automatically added with clean water, and a preset amount of cleaning liquid can be automatically added, thereby improving the timeliness, convenience and accuracy in adding the cleaning liquid.

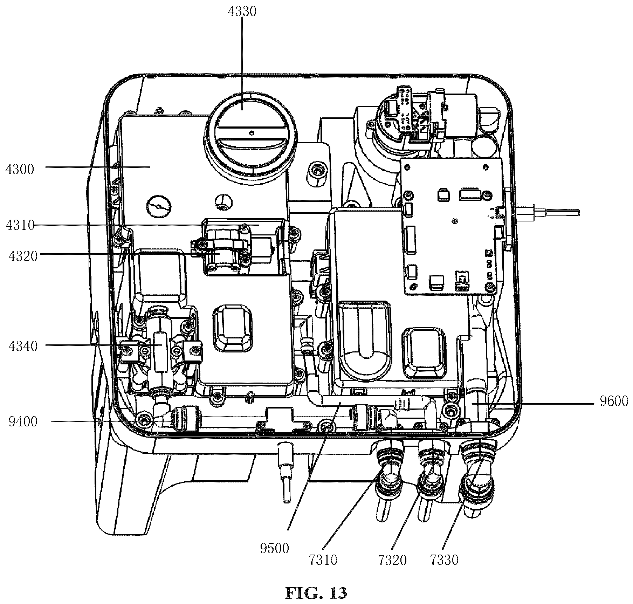

Specifically, the automatic water change assembly provided by the embodiments of the present disclosure is assembled in an automatic cleaning maintenance station. As an example, as shown in FIG. 3, the automatic water change assembly 7000 includes a control apparatus 7100 and a water tank assembly 7200. The control apparatus 7100 is arranged inside the water tank assembly 7200, and the control apparatus 7100 is configured to automatically add clean water and/or a cleaning liquid to the water tank assembly 7200. Specifically, as shown in FIG. 13, the water tank assembly 7200 includes a water tank top shell 7300 and a clean water tank 4000. The water tank top shell 7300 covers the clean water tank 4000. A water inlet 7310, an overflow port 7320 and a drainage port 7330 are arranged on the rear side of the water tank top shell 7300. The outer side of the water inlet 7310 is connected to a supply side of a water source, and the inner side of the water inlet 7310 is connected to the clean water tank 4000 by means of a clean-water tank water inlet pipe 9400. A side of the clean-water tank water inlet pipe 9400 close to the clean water tank 4000 is provided with a second electromagnetic valve 4340. The second electromagnetic valve 4340 is opened or closed to achieve the function of automatically adding clean water to the clean water tank 4000. The outer side of the overflow port 7320 is communicated with the outer side of the automatic water change assembly 7000 for discharging clean water overflowing from the clean water tank. The inner side of the overflow port 7320 is connected to the top of the side surface of the clean water tank 4000 by means of a clean-water tank overflow pipe 9500 for discharging overflowing water. The outer side of the drainage port 7330 is communicated with the outer side of the automatic water change assembly 7000 for discharging sewage from the sewage tank 5000. The inn side of the drainage port 7330 is connected to a drainage pump 5200 of the sewage tank 5000 by means of a sewage tank drainage pipe 9600. The clean water tank 4000 includes a clean-water tank body 4100 and a cleaning-liquid tank body 4200 which are vertically stacked. As shown in FIG. 5, the clean-water tank body 4100 includes a full-water detecting sensor 4110. A preset amount of cleaning liquid is automatically added to the clean-water tank body 4100 under the control of the control apparatus 7100 when the full-water detecting sensor 4110 is triggered. In some embodiments, the clean water tank 4000 includes a clean-water tank top cover 4300 covering the clean-water tank body 4100, and the clean-water tank top cover 4300 extends into the water tank top shell 7300.

In some embodiments, as shown in FIG. 13, the clean-water tank top cover 4300 includes a groove 4310, a peristaltic pump 4320 is arranged inside the groove 4310, and the peristaltic pump 4320 is configured to pump the cleaning liquid from the cleaning-liquid tank body 4200 to the clean-water tank body 4100 under the control of the control apparatus 7100. The peristaltic pump is arranged at the top end of the clean-water tank top cover 4300, which makes it convenient to maintain and replace the peristaltic pump, facilitates electrical connection to the control apparatus 7100, shortens a communication line with the control apparatus 7100, and improves the control accuracy and timeliness.

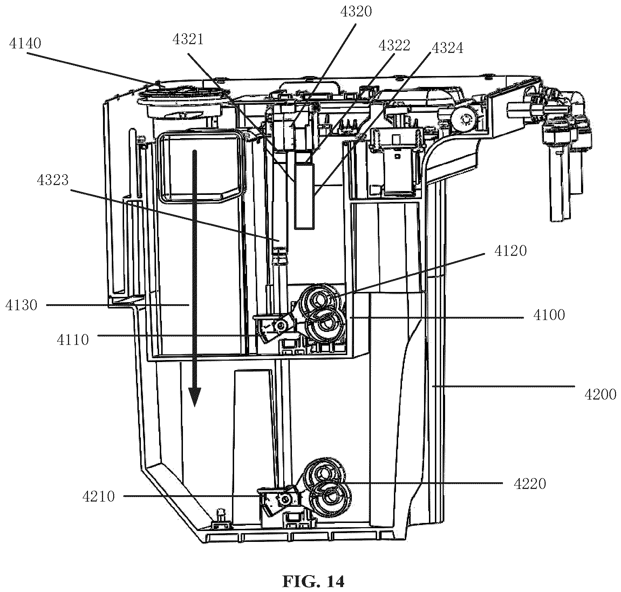

In some embodiments, as shown in FIG. 14, the peristaltic pump 4320 includes a liquid inlet 4321 and a liquid outlet 4322. The liquid inlet 4321 extends to a position be close to a bottom of the cleaning-liquid tank body 4200 through a first liquid delivery pipe 4323 and the liquid outlet 4321 extends into the clean-water tank body 4100 through a second liquid delivery pipe 4324. When the water level in the clean-water tank body 4100 reaches a preset position, the control apparatus 7100 pumps, by means of the peristaltic pump 4320, the cleaning liquid from the cleaning-liquid tank body 4200 to the clean-water tank body 4100 through the first liquid delivery pipe 4323, to achieve automatic adding of the cleaning liquid.

In some embodiments, as shown in FIG. 14, the cleaning-liquid tank body 4200 includes a cleaning liquid channel 4130. The cleaning liquid channel 4130 extends upwards from an interior of the cleaning-liquid tank body 4200 to the clean-water tank top cover along an exterior of the clean-water tank body 4100, as indicated by the arrow in FIG. 14 and is configured to add the cleaning liquid to the cleaning-liquid tank body. A cleaning-liquid channel cover 4140 is arranged at the top end of the cleaning liquid channel 4130. The cleaning-liquid channel cover 4140 is opened when the cleaning liquid needs to be added, to add the cleaning liquid to the cleaning-liquid tank body 4200.

In some embodiments, the cleaning-liquid tank body 4200 includes a cleaning-liquid floating ball base 4210 and a cleaning-liquid floating ball 4220. The cleaning-liquid floating ball base 4210 is arranged at the bottom of the cleaning-liquid tank body 4200. The cleaning-liquid floating ball 4220 is rotationally connected to the cleaning-liquid floating ball base and configured to detect a liquid level of the cleaning liquid. The cleaning-liquid floating ball 4220 descends with the decrease of the liquid level of the cleaning liquid under the action of gravity. When the cleaning-liquid floating ball 4220 descends to a second preset threshold, the control apparatus recognizes that the cleaning liquid in the cleaning-liquid tank body 4200 is exhausted. At this time, when the clean-water tank body 4100 is full of water and needs to be added with the cleaning liquid, the control apparatus may no longer control the peristaltic pump to work and stop adding the cleaning liquid to the clean-water tank body.

In some embodiments, the water tank assembly includes a cleaning-liquid state indicator lamp, and the cleaning-liquid state indicator lamp is controlled to light up when the liquid level of the cleaning liquid is lower than the second preset threshold.

In some embodiments, a side wall of the water tank top shell extends downwards along a side wall of the clean water tank to form a U-shaped structure to wrap the side wall of the clean-water tank body.

In some embodiments, the clean-water tank body 4100 includes a clean-water floating ball base 4110 and a clean-water floating ball 4120. The clean-water floating ball base 4110 is arranged at the bottom of the clean-water tank body 4100. The clean-water floating ball 4120 is rotationally connected to the clean-water floating ball base 4110 and configured to detect a water level. The clean-water floating ball 4120 descends with the decrease of the liquid level of clean water under the action of gravity. When the clean-water floating ball 4120 descends to a first preset threshold, the control apparatus recognizes that clean water in the clean-water tank body 4100 is exhausted. When the water level is lower than the first preset threshold, the control apparatus controls the second electromagnetic valve 4340 to be opened to automatically add clean water to the clean water tank. The process of automatically adding clean water is as described in the above embodiments, and will not be repeated here.

According to the embodiments of the present disclosure, whether the clean water tank is full of water is detected by the full-water detecting sensor in the clean-water tank body, and if yes, a preset amount of cleaning liquid is automatically added to the clean-water tank body under the control of the control apparatus. In addition, a preset amount of cleaning liquid can be added according to the amount of water in the clean water tank, thereby achieving automatic adding of an accurate amount of cleaning liquid.

In the related art, automatic dust collection and mop cloth cleaning are performed on an automatic cleaning device by means of the automatic cleaning maintenance station. Therefore, it is necessary to automatically add clean water to the clean water tank in the automatic cleaning maintenance station, and a valve for automatically adding clean water can be automatically closed when the clean water tank is full of clean water to avoid overflow of clean water. However, due to various factors, a valve for adding clean water cannot be closed automatically after the water tank assembly is full of clean water, resulting in overflow of clean water. Although the automatic water change assembly can automatically add clean water, inconvenience may be brought to the application of the automatic water change assembly since the valve cannot be automatically closed.

Therefore, embodiments of the present disclosure also provide an automatic water change assembly that achieves dual control by means of a float valve structure and its attached sensor, which avoids, to the maximum extent, the risk of overflow when the clean water tank is full, thereby improving the safety in application of the automatic water change assembly.

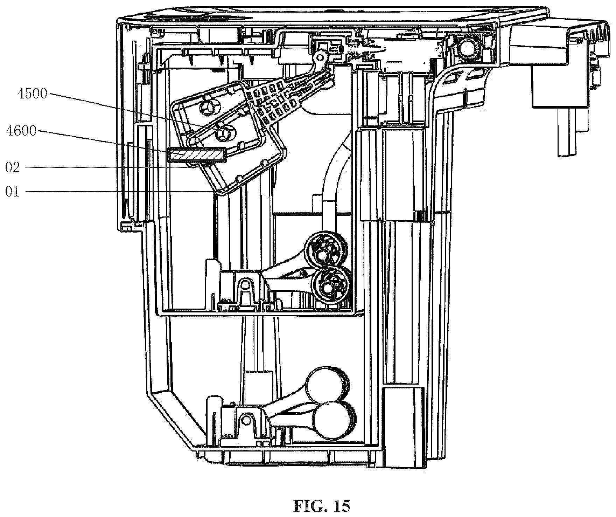

Specifically, embodiments of the present disclosure provide an automatic water change assembly assembled in an automatic cleaning maintenance station. As an example, as shown in FIG. 3, the automatic water change assembly 7000 includes a control apparatus 7100 and a water tank assembly 7200. The control apparatus 7100 is arranged inside the water tank assembly 7200, and the control apparatus 7100 is configured to automatically fill the water tank assembly 7200 with clean water and/or automatically close a second electromagnetic valve 4330 for adding clean water. Specifically, as shown in FIG. 13, the water tank assembly 7200 includes: a clean-water tank body 4100; a water inlet pipe 9400 configured to fill the clean-water tank body 4100 with clean water; and a float valve 4400 arranged in the clean-water tank body 4100 and configured to move vertically with the change of the water level in the clean-water tank body 4100. In response to the float valve 4400 being located at a first position 01, the control apparatus controls the water inlet pipe 9400 to stop adding clean water to the clean-water tank body 4100. In response to the float valve 4400 being located at a second position 02, the float valve 4400 blocks an outlet 9410 of the water inlet pipe 9400 for injecting water into the clean-water tank body 4100, as shown in FIG. 15.

The first position 01 may be a point position or a section position. At the first position 01, after the float valve 4400 reaches the first position 01 with the rising of the water level in the clean-water tank body 4100, the control apparatus receives sensing information, indicating that the water level in the clean-water tank body 4100 has reached a preset full-water position. This can be specifically achieved in the following ways.

In some embodiments, the automatic water change assembly includes: a signal transmitting component 4500 configured to transmit a sensing signal; and a signal sensing component 4600 configured to receive the sensing signal. Any one of the signal transmitting component 4500 and the signal sensing component 4600 is arranged inside a float portion 4420, and the other of the signal transmitting component 4500 and the signal sensing component 4600 is arranged on the inner side wall of the clean-water tank body 4100, that is, the positions of the signal transmitting component 4500 and the signal sensing component 4600 are interchangeable without influencing generation of full-water sensing information. When the float portion 4420 moves such that the float valve 4400 is located at the first position, the signal sensing component 4600 is triggered such that the control apparatus 7100 closes the second electromagnetic valve 4340, and in turn controls the water inlet pipe 9400 to stop filling the clean-water tank body 4100 with clean water. When the control apparatus 7100 successfully closes the second electromagnetic valve 4340 and the water inlet pipe 9400 stops adding clean water to the clean-water tank body 4100, the float valve 4400 may not rise any more, that is, the function of closing the water inlet pipe is implemented at a time.

In some embodiments, the signal transmitting component 4500 includes a magnet, and the signal sensing component 4600 includes a Hall element; or the signal transmitting component 4500 is an NFC card reading module, and the signal sensing component 4600 is an NFC tag; or the signal transmitting component 4500 is an RFID reader, and the signal sensing component 4600 is an RFID electronic tag, which is not limited herein. Any sensor capable of achieving position sensing can be applied in the embodiments.

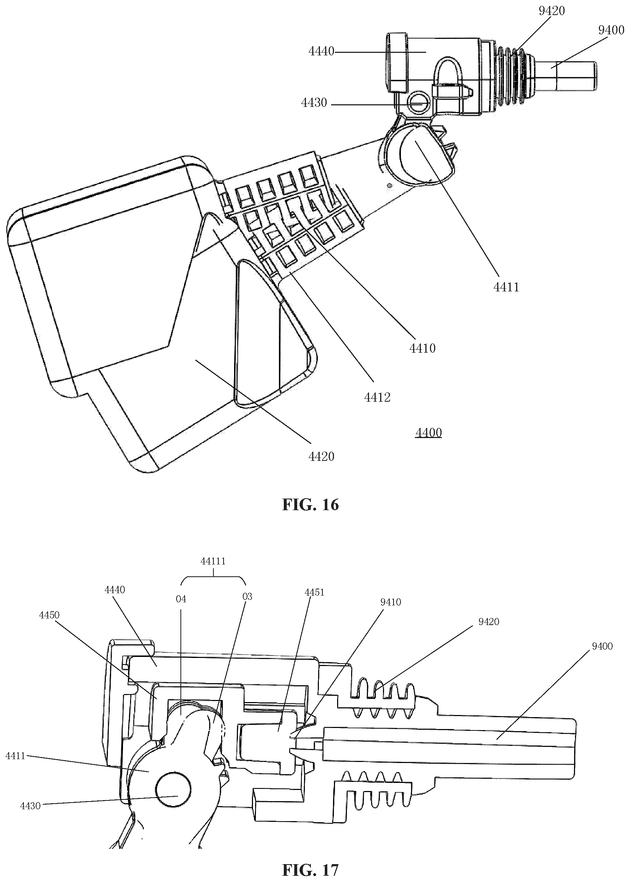

In some embodiments, as shown in FIG. 16, the float valve 4400 includes a pivot rod 4410. The pivot rod 4410 includes a first end portion 4411. The first end portion 4411 is pivotally connected to a fixed rotating shaft 4430 and pivotally connected to a fixed case 4440 by means of the rotating shaft 4430. The pivot rod 4410 includes a second end portion 4412. The second end portion 4412 is opposite to the first end portion 4411. The float valve 4400 includes a float portion 4420. The float portion 4420 is connected to the second end portion 4412 and configured to rotate relative to the first end portion 4411 of the pivot rod 4410 as the water level in the clean-water tank body rises until the float valve 4400 is located at a first position. Specifically, the float portion 4420 is of a hollow structure, and includes a signal transmitting component 4500 or a signal sensing component 4600. The float portion 4420 may be made of a light material, such as plastic and rubber; or light metal, so as to provide upward buoyancy for the float valve 4400, which in turn drives the pivot rod 4410 to rotate upwards. The pivot rod 4410 may also be a hollow or hollowed-out structure, and may be made of a light material, such as plastic and rubber; or light metal, so as to provide upward buoyancy for the float valve 4400.

In some embodiments, in response to the float valve 4400 being located at the first position 01 and the water level of the clean-water tank body continuing to rise, the float portion 4420 drives the pivot rod 4410 to rotate relative to the fixed rotating shaft 4430 until the float valve 4400 is located at the second position 02. When the float valve 4400 is located at the first position 01, in a normal state, the control apparatus 7100 determines that the clean water tank is full of water due to the responses of the signal transmitting component 4500 and the signal sensing component 4600. At this time, the second electromagnetic valve 4340 is closed, and the water inlet pipe 9400 stops filling clean water into the clean-water tank body 4100. However, due to failures of the signal transmitting component 4500 and the signal sensing component 4600 and the like, the control apparatus 7100 fails to close the second electromagnetic valve 4340, and the water inlet pipe 9400 does not stop filling clean water into the clean-water tank body 4100. At this time, the float valve 4400 continues to rise with the water level of the clean-water tank body, and the float portion 4420 drives the pivot rod 4410 to rotate relative to the fixed rotating shaft 4430 until the float valve 4400 is located at the second position 02. The first end 4411 of the float valve 4400 may block the outlet 9410 of the water inlet pipe 9400 through which water is injected into the clean-water tank body 4100, thus forcibly stopping an injection action of the water inlet pipe and avoiding the risk of water overflow.

Specifically, as shown in FIG. 17, in some embodiments, the float valve 4400 further includes a plug body 4450 movably connected to the first end portion 4411 of the pivot rod 4410 and configured to move toward or away from the outlet 9410 of the water inlet pipe 9400 under the push of a push rod 44111 of the first end portion 4411 of the pivot rod 4410, as shown in a third position 03 and a fourth position 04 in FIG. 17 so as to block or unblock the outlet 9410 of the water inlet pipe.

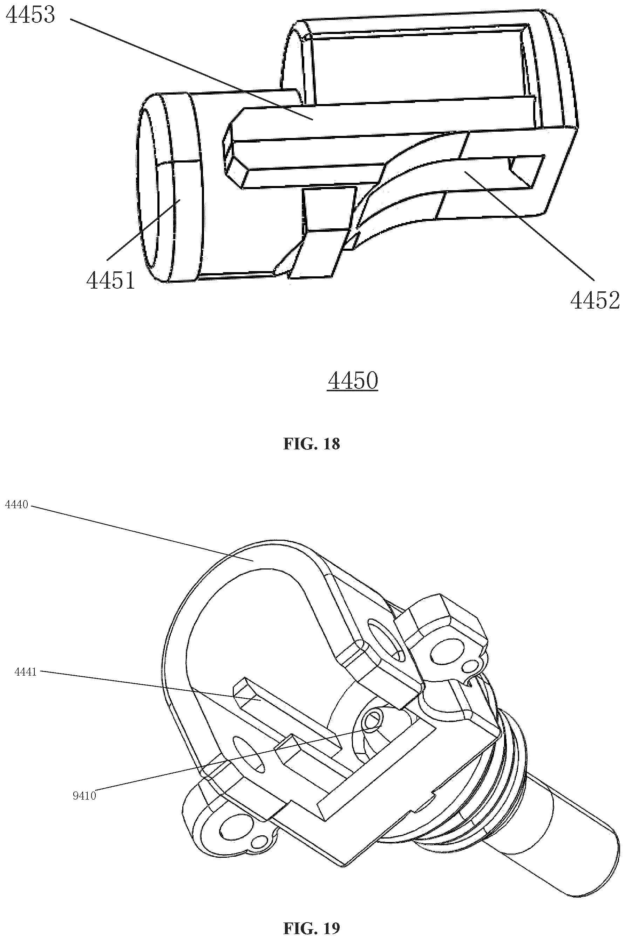

In some embodiments, as shown in FIG. 18, the plug body 4450 includes a cavity 4452, and the cavity includes a downward opening. The first end portion 4411 of the pivot rod 4410 includes the push rod 44111, and the push rod 44111 can freely and movably extend into the cavity 4452. With the rotation of the pivot rod 4410, the push rod 44111 pushes two opposite side walls of the cavity 4452 such that the plug body moves toward or away from the outlet of the water inlet pipe.

In some embodiments, the water tank assembly further includes a fixed case 4440 for accommodating the outlet 9410 of the water inlet pipe 9400, the plug body 4450 and the first end portion 4411 of the pivot rod 4410. The fixed case 4440 and the water inlet pipe 9400 can be integrally molded to avoid water leakage. A threaded rubber pad 9420 is arranged at a position where the fixed case 4440 and the water inlet pipe 9400 are connected to achieve the effect of sealing when assembled on the clean-water tank body. The first end portion 4411 of the pivot rod 4410 is connected between two opposite side walls of the fixed case 4440 by means of the fixed rotating shaft 4430 and is configured such that the pivot rod 4410 can rotate around the fixed rotating shaft 4430 relative to the fixed case 4440 and push the plug body 4450 to move horizontally.

In some embodiments, as shown in FIG. 19, two inner side walls of the fixed case 4440 are provided with slide ways 4441, two sides of an outer side wall of the plug body 4450 are provided with slide rails 4453, and the slide rails 4453 and the slide ways 4441 cooperate to achieve sliding connection, which in turn ensures that the plug body 4450 can move in a horizontal direction to accurately block the outlet 9410 of the water inlet pipe.

In some embodiments, as shown in FIG. 18, the plug body further includes a soft rubber pad 4451 arranged on an end surface abutting against the outlet 9410 of the water inlet pipe. The soft rubber pad 4451 is configured to block or unblock the outlet 9410 of the water inlet pipe in response to the plug body 4450 moving toward or away from the outlet 9410 of the water inlet pipe. In some embodiments, as shown in FIG. 19, the outlet of the water inlet pipe is of a conical structure, so as to seal the outlet 9410 of the water pipe after matching the soft rubber pad 4451.

In some embodiments, as shown in FIG. 13, an overflow hole is formed at the top of the clean-water tank body and communicated with the overflow port 7320 by means of an overflow pipe 9500. After the clean water tank 4000 is full of water, and the water inlet still cannot be completely blocked by the float valve at the first position or the second position as described above, water in the clean water tank can be automatically discharged through the overflow hole, the overflow pipe 9500 and the overflow port 7320, so as to prevent clean water from flowing into the automatic water change assembly 7000 and damaging devices.

According to the embodiments of the present disclosure, whether the clean water tank is full of water is detected by means of the float valve in the clean-water tank body, the float valve is arranged in the clean-water tank body, and the float valve moves along with the rising of the water level in the clean-water tank body. The control apparatus controls the water inlet pipe to stop adding clean water to the clean-water tank body when the float valve is located at the first position. When the float valve is located at the second position, the float valve blocks the outlet of the water inlet pipe, through which water is added to the clean-water tank body. In addition, excess water can be discharged through the overflow hole, thereby preventing, by multiple control methods, water from overflowing the automatic cleaning maintenance station after the clean water tank is full.

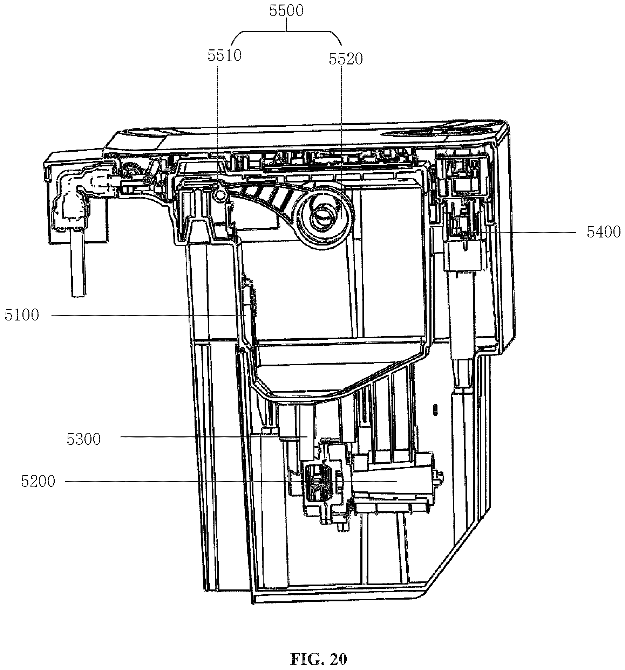

Embodiments of the present disclosure also provide an automatic water change assembly. As shown in FIG. 20, the automatic water change assembly 7000 includes a control apparatus 7100 and a water tank assembly 7200. The control apparatus 7100 is arranged inside the water tank assembly 7200, and the control apparatus 7100 is configured to automatically discharge sewage out of the water tank assembly 7200. The water tank assembly 7200 includes: a sewage tank body 5100; and a drainage pump 5200 located below the sewage tank body 5100 and configured to provide power for discharging sewage. In response to sewage in the sewage tank body 5100 reaching a preset height, the drainage pump 5200 is started to discharge sewage out of the sewage tank body 5100.

In some embodiments, the water tank assembly further includes: a drainage pipe 5300 connected to a water outlet of the drainage pump 5200; and a drain valve 5400 arranged on the drainage pipe 5300 and configured to open or close the passage of the drainage pipe.

In some embodiments, in response to sewage in the sewage tank body 5100 reaching a preset height, the drain valve 5400 and the drainage pump 5200 are started in sequence.

In some embodiments, the water tank assembly further includes a full-sewage detecting assembly 5500, which is at least partially arranged in the sewage tank body 5100 and configured to detect the water level of sewage in the sewage tank body.

In some embodiments, the full-sewage detecting assembly 5500 includes: a full-sewage float base 5510 arranged at the top of the sewage tank body 5100; and a full-sewage float portion 5520 connected to the full-sewage float base 5510 and configured to move relative to the full-sewage float base with the change of the water level of sewage in the sewage tank body 5100.

In some embodiments, the full-sewage float portion 5520 is pivotally connected to the full-sewage float base 5510, and the full-sewage float portion 5520 is configured to rotate relative to the full-sewage float base 5510 with the change of the water level of sewage in the sewage tank body 5100.

In some embodiments, the full-sewage detecting assembly 5500 further includes: a signal transmitting component configured to transmit a sensing signal; and a signal sensing component configured to receive the sensing signal. One of the signal transmitting component and the signal sensing component is arranged in the full-sewage float portion 5520, and the other of the signal transmitting component and the signal sensing component is arranged on a side wall of the sewage tank body 5100. In response to sewage in the sewage tank body 5100 reaching a preset height, the full-sewage float portion 5520 is located at a preset position, and the signal sensing component is triggered, so that the drainage pump 5200 is started to discharge sewage from the sewage tank body 5100.

In some embodiments, the signal transmitting component includes a magnet, and the signal sensing component includes a Hall element.

In some embodiments, a Hall sensor is arranged inside a water storage chamber 2700 included in an automatic cleaning maintenance station body 2000, and forms a sensing signal with a Hall sensor in the full-sewage float portion 5520. In an initial state in the full-sewage float portion 5520, the magnet in the full-sewage float portion 5520 is triggered simultaneously with the Hall sensor inside the water storage chamber 2700 and the Hall sensor on the side wall of the sewage tank body 5100, indicating that the sewage tank is assembled in place and the sewage tank is not full. When more and more sewage is collected, the full-sewage float portion 5520 floats upwards and is separated from the Hall sensor arranged inside the water storage chamber 2700, indicating that the sewage tank is full and a signal lamp lights up to start to pump sewage.

In some embodiments, the bottom of the sewage tank body 5100 is funnel-shaped, and an end portion of the bottom of the sewage tank body 5100 away from the top of the sewage tank body is provided with a drainage port communicated with a water inlet of the drainage pump by means of a pipeline.

In order to further improve the user's use experience, a float assembly is usually added to the clean water tank of the existing cleaning device, such that adding of a cleaning liquid can be automatically stopped when the clean water tank is full of the cleaning liquid.

Specifically, the float assembly includes a float supporting apparatus and a float. The float is movably connected to the float supporting apparatus. The float supporting apparatus is mounted at an assembly hole of the clean water tank. A water inlet channel is arranged inside the float supporting apparatus, and a cleaning liquid may flow into the clean water tank through the water inlet channel. In this way, the float floats under the buoyancy of the cleaning liquid when the clean water tank is full of the cleaning liquid, such that the water inlet channel of the float supporting apparatus is blocked by the float to achieve the purpose of stopping adding the cleaning liquid. However, poor leakproofness between the existing float supporting apparatus and the assembly hole of the clean water tank causes the problem that electronic elements inside the cleaning device are damaged by the cleaning liquid leaking from a gap between the float supporting apparatus and the assembly hole, which affects the service life of the cleaning device.

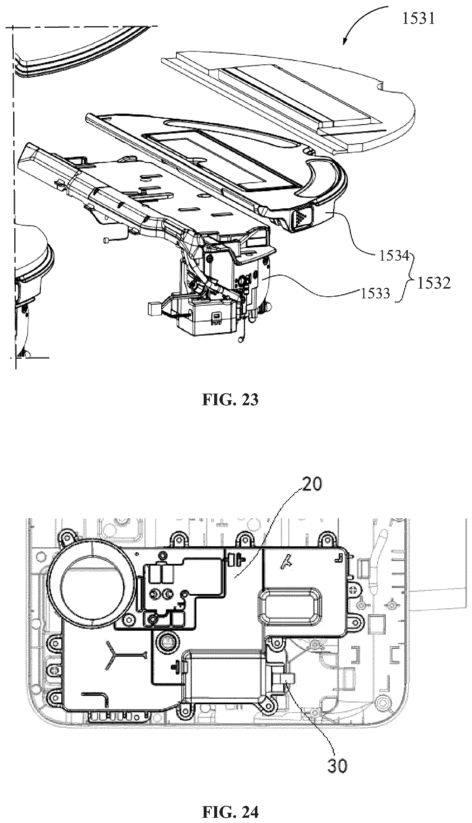

As shown in FIGS. 24, 25, 27 and 28, embodiments of the present disclosure also provide a float supporting apparatus 30, including a supporting main body 301. A sealing element 302 is arranged on a periphery of the supporting main body 301. The sealing element 302 includes a first sealing body 3021 and a second sealing body 3022 connected to the first sealing element 3021. The first sealing body 3021 may extend into the assembly hole 40 of the water tank body 20 to block a gap between an outer wall of the supporting main body 301 and an inner wall of the assembly hole 40. The second sealing body 3022 may fit an inner side edge of the assembly hole 40 to block the inner side edge of the assembly hole 40.

The float supporting apparatus 30 is applied to a clean water tank of a cleaning device. The cleaning device may be a sweeping robot, a mopping robot, a floor polishing robot or a weeding robot. The cleaning device may be used for household indoor cleaning, large-scale place cleaning, etc. For ease of description, the technical solution of the present disclosure is described by taking a sweeping robot as an example in this embodiment.

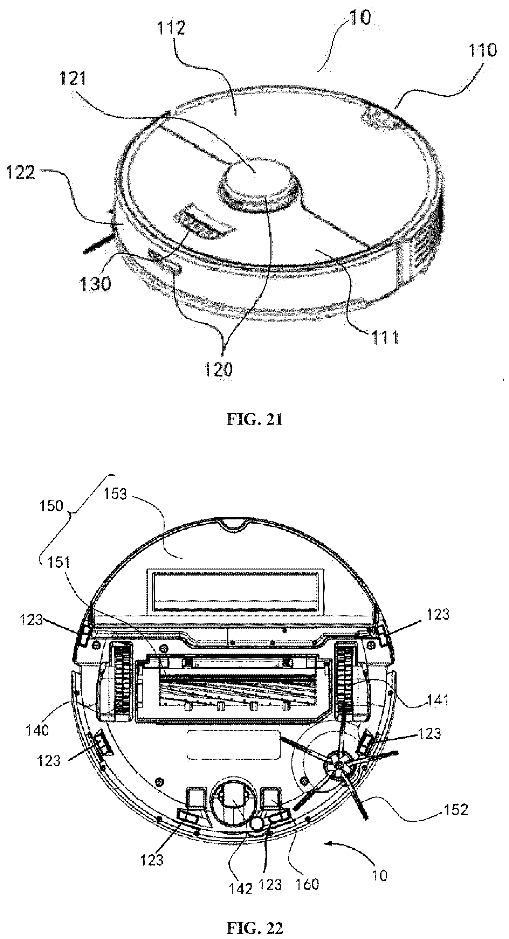

Further, as shown in FIGS. 21 and 22, the sweeping robot 10 may include a robot body 110, a perception system 120, a controller, a driving module, a cleaning system 150, an energy system, and a human-machine interaction system 130. As shown in FIG. 21, the robot body 110 includes a forward portion 111 and a rearward portion 112, is approximately circular (both the forward portion and the rearward portion are circular), and may also be in other shapes including, but not limited to, an approximately D shape with a square forward portion and a circular rearward portion and a rectangular or square shape with a square forward portion and a square rearward portion.

As shown in FIG. 21, the perception system 120 includes a position determining apparatus 121 located on the robot body 110, a collision sensor arranged on a front collision structure 122 of the forward portion 111 of the robot body 110, a proximity sensor located at a side edge of the sweeping robot, and sensing devices such as a cliff sensor disposed at a lower portion of the robot body 110 and a magnetometer, an accelerometer, a gyroscope, and an odograph arranged inside the robot body 110, for providing various position information and motion status information of the sweeping robot to the controller. The position determining apparatus 121 includes, but is not limited to, a camera and a laser distance sensor (LDS). In some preferred embodiments, the position determining apparatus 121 (such as a camera and a laser sensor) is located on the front side of the robot body 110, i.e., the foremost end of the forward portion 111, so as to more accurately sense the environment in front of the cleaning robot and realize accurate positioning.

As shown in FIG. 21, the forward portion 111 of the robot body 110 may carry the front collision structure 122. The front collision structure 122 detects one or more events in a travel path of the cleaning robot 10 via a sensor system disposed thereon, such as a collision sensor or a proximity sensor (infrared sensor), when a driving wheel module 141 propels the cleaning robot 10 to travel on the floor in the process of cleaning. The cleaning robot 10 may control, based on the events (such as an obstacle and a wall) detected by the front collision structure 122, the driving module such that the cleaning robot 10 may respond to the events, e.g., moving away from obstacles, performing an obstacle avoidance operation and the like.

The controller is arranged on a main circuit board within the robot body 110 and includes a computing processor, such as a central processing unit and an application processor, in communication with a non-transitory memory, such as a hard disk, a flash memory and a random access memory. The application processor is configured to draw a simultaneous map of an environment where the cleaning robot 10 is located based on obstacle information fed back by the laser distance sensor by use of a positioning algorithm, for example, simultaneous localization and mapping (SLAM). In addition, the controller comprehensively determines, based on the distance and speed information fed back by sensing devices such as the sensor arranged on the front collision structure 122, the cliff sensor 123, the magnetometer, the accelerometer, the gyroscope and the odograph, a current working status and a current position of the cleaning robot 10, as well as a current posture of the cleaning robot 10, such as crossing a doorsill, getting on a carpet, being at a cliff, being stuck from above or below, having a full dust box, being picked up, etc., and provide specific next action strategies for different cases, such that the cleaning robot 10 has better sweeping performance and user experience.

As shown in FIG. 22, the driving module may control the robot body 110 to travel across the floor based on a driving command with distance and angle information. The driving module includes a main driving wheel module that may control both of a left wheel 140 and a right wheel 141 simultaneously. For more precise control of the robot's movement, the main driving wheel module preferably includes a left driving wheel module and a right driving wheel module, which are arranged along a transverse axis defined by the robot body 110. For more stable movement on the floor or higher movement ability of the cleaning robot, the cleaning robot 10 may include one or more driven wheels 142, which include but are not limited to universal wheels. The main driving wheel module includes a driving motor, and a control circuit for controlling the driving motor, and may also be connected to a circuit for measuring a driving current and an odograph. The left wheel 140 and the right wheel 141 may be provided with offset drop suspension systems, which are fastened movably to (e.g., attached rotatably to) the robot body 110, and receive a spring bias biased downward and away from the robot body 110. The spring bias allows the driving wheel to maintain contact and traction with the floor with certain floor attachment force, while cleaning elements of the cleaning robot 10 are also in contact with the floor with certain pressure.

The energy system includes a rechargeable battery, such as a nickel-hydrogen battery and a lithium battery. The rechargeable battery may be connected to a charging control circuit, a battery pack charging temperature detecting circuit, and a battery undervoltage monitoring circuit which are then connected to a single-chip microcomputer control circuit. A host is connected to a charging pile through a charging electrode 160 arranged on a side or below the robot body for charging.

The human-machine interaction system 130 includes buttons on a panel of the host for the user to select functions, and may further include a display screen and/or an indicator light and/or a speaker, as well as a mobile phone client program. The display screen, the indicator light and the speaker show the user the current mode or function options of the cleaning device. For a route navigation type automatic cleaning robot 10, a mobile phone client may show the user a map of the environment where the device is located, as well as a position of the device, thereby providing the user with richer and more user-friendly function items. Specifically, the cleaning robot has various modes, such as a working mode and a self-cleaning mode. The working mode refers to a mode in which the cleaning robot performs an automatic cleaning operation, and the self-cleaning mode refers to a mode in which the cleaning robot removes dirt on a rolling brush and the side brush 152 on the base, automatically collects the dirt, and/or automatically cleans and dries a mop cloth.

The cleaning system 150 may be a dry cleaning system 151 and/or a wet cleaning system 153.

As shown in FIG. 22, the dry cleaning system 151 provided by the embodiment of the present disclosure may include a rolling brush, a dust box, a fan and an air outlet. The rolling brush having certain interference with the floor sweeps up garbage on the ground and rolls the garbage up to the front of a dust suction port between the rolling brush and the dust box, and then the garbage is sucked into the dust box by a gas which has a sucking force, is generated by the fan and passes through the dust box. The dry cleaning system 151 may further include a side brush 152 having a rotating axis, and the rotating axis is angled relative to the floor for moving debris into a rolling brush area of the cleaning system 150.

As shown in FIGS. 22 and 23, the wet cleaning system 153 provided by the embodiment of the present disclosure may include a cleaning head 1531, a driving unit 1532, a water supply mechanism, a clean water tank and the like. The cleaning head 1531 may be arranged below the clean water tank, and a cleaning liquid inside the clean water tank is delivered to the cleaning head 1531 by means of the water supply mechanism, such that the cleaning head 1531 can perform wet cleaning on a surface to be cleaned. In other embodiments of the present disclosure, the cleaning liquid inside the clean water tank may also be directly sprayed onto the surface to be cleaned, and the cleaning head 1531 cleans the surface by uniformly spreading the cleaning liquid.

The cleaning head 1531 is configured to clean the surface to be cleaned, and the driving unit 1532 is configured to drive the cleaning head 1531 to substantially reciprocate along a target surface which is a part of the surface to be cleaned. The cleaning head 1531 reciprocates along the surface to be cleaned. Mop cloth is arranged on a contact surface between the cleaning head 1531 and the surface to be cleaned. The mop cloth of the cleaning head 1531 is driven by the driving unit 1532 to reciprocate and generate high-frequency friction with the surface to be cleaned, thereby removing stains on the surface to be cleaned. Alternatively, the mop cloth may be arranged in a floating manner and always kept in contact with the surface to be cleaned in the process of cleaning without being driven to reciprocate by the driving unit 1532.

As shown in FIG. 23, the driving unit 1532 may further include a driving platform 1533 and a supporting platform 1534. The driving platform 1533 is connected to a bottom surface of the robot body 110 for providing a driving force, and the supporting platform 1534 is detachably connected to the driving platform 1533 for supporting the cleaning head 1531, and may be raised and lowered under the driving of the driving platform 1533.

The wet cleaning system 153 may be connected to the robot body 110 by means of an active raising and lowering module. When the wet cleaning system 153 does not operate temporarily, for example, the cleaning robot 10 stops at a base station to clean the cleaning head 1531 of the wet cleaning system 153 and to add water to the clean water tank; or when the surface to be cleaned cannot be cleaned by the wet cleaning system 153, the wet cleaning system 153 is raised by the active raising and lowering module.

It should be noted that the sweeping robot may further include other modules or assemblies not shown in FIGS. 21 to 23, or may only include some of the above modules or assemblies, which is not limited in the embodiments of the present disclosure. The above description is given only by taking the above sweeping robot as an example.

In the case where the clean water tank of the above cleaning device is equipped with the float supporting apparatus 30 in this embodiment, a water tank body 20 of the clean water tank is provided with an assembly hole 40 for mounting of the float supporting apparatus 30, i.e., a supporting main body 301 penetrates through the assembly hole 40, and a first sealing body 3021 arranged at the periphery of the supporting main body 301 also extends into the assembly hole 40. Therefore, the first sealing body 3021 is used to block the gap between the outer wall of the supporting main body 301 and the inner wall of the assembly hole 40 to prevent the cleaning liquid from flowing out through the gap, while the second sealing body 3022 is located outside the assembly hole 40 and fits an inner side edge of the assembly hole 40, such that the inner side edge of the assembly hole 40 is blocked by the second sealing body 3022 to prevent the cleaning liquid from entering the assembly hole 40. In this way, the assembly hole 40 is blocked by the first sealing body 3021 and the second sealing body 3022 in all directions, thereby improving the leakproofness between the float supporting apparatus 30 and the assembly hole 40, avoiding the phenomenon that the cleaning liquid leaks from the gap between the float supporting apparatus 30 and the assembly hole 40 to damage the electronic components inside the cleaning device, and prolonging the service life of the cleaning device.

It can be understood that the inner side edge of the assembly hole 40 is an edge of a side of the assembly hole 40 close to the water tank body 20. The cleaning liquid may be clean water, a detergent or a mixed solution of the clean water and the detergent. The first sealing body 3021 and the second sealing body 3022 may be made of elastic sealing materials, for example, rubber to improve the sealing performance of the first sealing body 3021 and the second sealing body 3022.

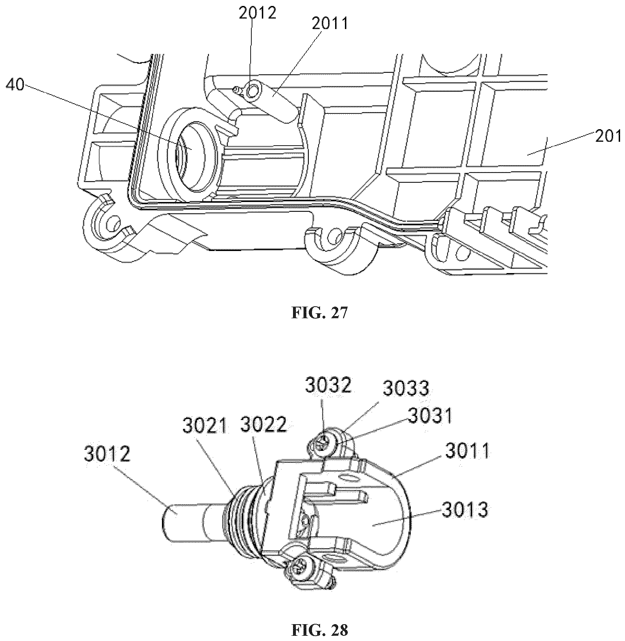

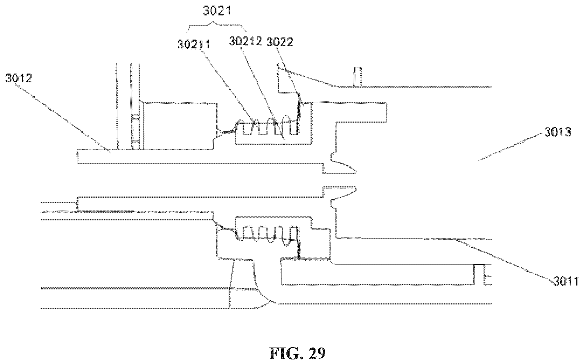

In the above-mentioned embodiments, as shown in FIGS. 28 and 29, the first sealing body 3021 includes a connecting body 30212 fitted over the supporting main body 301, and at least one sealing ring 30211 capable of being in interference fit with the assembly hole 40 is arranged on the connecting body 30212 in an axial direction.

In specific applications, the number of the sealing rings 30211 may be set according to the depth of the assembly hole 40, i.e., the greater the depth of the assembly hole 40 is, the greater the number of sealing rings 30211 is, and the smaller the depth of the assembly hole 40 is, the less the number of sealing rings 30211 is.

By providing the sealing ring 30211 on the connecting body 30212, the friction between the first sealing body 3021 and the assembly hole 40 can be reduced on the premise of ensuring the sealing effect, thus making the first sealing body 3021 extend into the assembly hole more smoothly.

The interference fit between the sealing ring 30211 and the assembly hole 40 can further improve the sealing effect of the first sealing body 3021, so as to prevent the cleaning liquid from leaking from the gap between the supporting body 301 and the inner wall of the assembly hole 40.

Further, as shown in FIG. 29, the sealing ring 30211 and the connecting body 30212 are integrally molded, thereby preventing the sealing effect from being affected by a seam between the sealing ring 30211 and the connecting body 30212, improving the leakproofness of the first sealing body 3021, and also omitting a process of assembly between the sealing ring 30211 and the connecting body 30212.

Further, as shown in FIGS. 28 and 29, the second sealing body 3022 and the first sealing body 3021 are integrally molded, and the first sealing body 3021 and the second sealing body 3022 are integrally molded, thereby preventing the sealing effect from being affected by a seam between the first sealing body 3021 and the second sealing body 3022, improving the leakproofness of the sealing element 302, and also omitting a process of assembly between the first sealing body 3021 and the second sealing body 3022.

The first sealing body 3021 may be a sealing ring fitted over the supporting main body 301, and the external diameter of the sealing ring is greater than that of the assembly hole 40, such that the sealing ring may fit the inner side edge of the assembly hole 40 to block the edge of the assembly hole 40, thereby preventing the cleaning liquid from entering the assembly hole 40. In addition, the first sealing body 3021, which is a sealing ring, is simple in structure, thereby simplifying the overall structure of the sealing element 302 and facilitating assembly and maintenance of the sealing element 302.

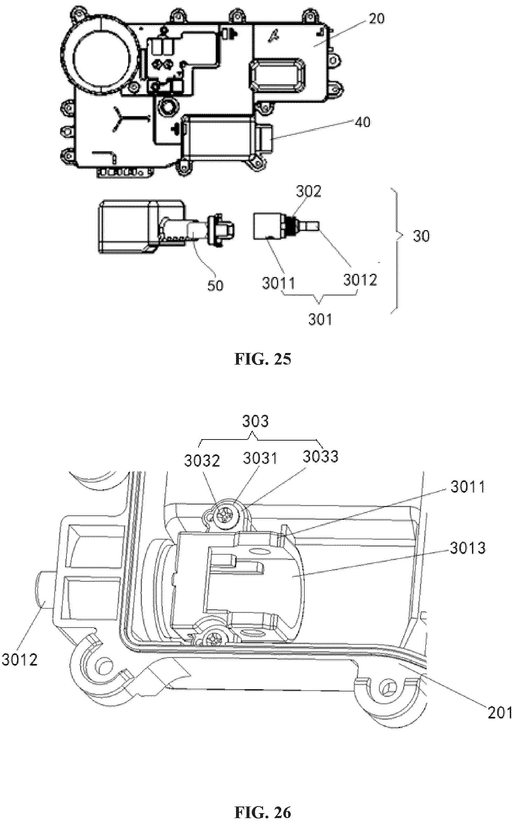

Further, as shown in FIGS. 25 and 28, the supporting main body 301 is also provided with a detachable connector 303 detachably connected to the water tank body 20.

The supporting main body 301 is detachably connected to the water tank body 20, which makes it convenient to disassemble and assemble the float supporting apparatus 30 and the water tank body 20. Thus, the float supporting apparatus 30 can be detached for replacement in case of damage to the float supporting apparatus 30.

Specifically, the detachable connector 303 includes at least one connecting boss 3033 and at least one first bolt 3032. The connecting boss 3033 is provided with a first screw hole 3031 capable of being in threaded connection with the first bolt 3032.

Generally, there are two connecting bosses 3033 and two first bolts 3032, and the two connecting bosses 3033 are arranged on two opposite sides of the supporting main body 301 respectively, so as to improve the stability in mounting the float supporting apparatus 30. In specific application, as shown in FIGS. 25 and 27, the water tank body 20 is provided with a second screw hole 2012, such that the float supporting apparatus 30 and the water tank body 20 can be assembled by means of threaded connection between the first bolts 3032 and the first screw hole 3031 and second screw hole 2012.

Specifically, as shown in FIGS. 25, 26 and 28, the supporting main body 301 includes a water inlet pipeline 3012 and a float supporting frame 3011. The float supporting frame 3011 is provided with a first cavity 3013 for accommodating a float 50, and the water inlet pipeline 3012 is communicated with the first cavity 3013.

The float supporting frame 3011 is movably connected to the float 50, one end of the water inlet pipeline 3012 passes through the assembly hole 40, and the float supporting frame 3011 is located inside the water tank body 20. In this way, the water tank body is connected to an external water source by means of the water inlet pipeline 3012 when it is necessary to add water to the water tank body 20, such that a liquid enters the water tank body 20 through the water inlet pipeline 3012 and the first cavity 3013 of the float supporting frame 3011. In the case where the water tank body 20 is full of the liquid, the float 50 is driven to rise by the buoyancy of the liquid, so as to enter the first cavity 3013 and block the water inlet pipeline 3012, thereby achieving the purpose of automatically stopping adding the liquid.

As shown in FIGS. 24, 25, 28 and 29, embodiments of the present disclosure provide a clean water tank, including a water tank body 20 and the float supporting apparatus 30 as described above. A main body is provided with the water tank body 20, a wall of the water tank body 20 is provided with an assembly hole 40, and the float supporting apparatus 30 is mounted in the assembly hole 40. A first sealing body 3021 of the float supporting apparatus 30 is located inside the assembly hole 40 to block a gap between an outer wall of the supporting main body 301 and an inner wall of the assembly hole 40. A second sealing body 3022 of the float supporting apparatus 30 fits an inner side edge of the assembly hole 40 to block the inner side edge of the assembly hole 40.

Specifically, the water tank body 20 includes a water storage portion and a cover body 201, and the water storage portion is detachably connected to the cover body 201, which makes it convenient to detach the cover body 201 and to clean the inside of the water storage portion. In some embodiments, the assembly hole 40 is formed in the cover body 201 that is lighter, so as to facilitate mounting of the float supporting apparatus 30.

It should be noted that the float supporting apparatus 30 involved in this embodiment may be the float supporting apparatus 30 as described in the above-mentioned embodiment, and a reference may be made to the corresponding content in the above-mentioned embodiments for the specific implementation and working principles of the float supporting apparatus 30, which will not be repeated herein.

Further, as shown in FIGS. 26, 27 and 28, an inner wall of the water tank body 20 is provided with a mounting portion 2011, the mounting portion 2011 is provided with a second screw hole 2012, and first bolts 3032 of the float supporting apparatus 30 are in threaded connection with a first screw hole 3031 in a first boss of the float supporting apparatus 30 and the second screw hole 2012, such that the float supporting apparatus 30 is detachably connected to the water tank body 20.

The number of the second screw holes 2012 is the same as that of the first screw holes 3031, such that the float supporting apparatus 30 and the water tank body 20 can be assembled by means of threaded connection between the first bolts 3032 and the first screw holes 3031 and second screw holes 2012.

Embodiments of the present disclosure provide a cleaning device, including a main body and the clean water tank as described above, the clean water tank being arranged on the main body.

According to the float supporting apparatus, the clean water tank and the cleaning device provided by the embodiments of the present disclosure, the float supporting apparatus blocks the gap between the outer wall of the supporting main body and the inner wall of the assembly hole by means of the first sealing body to prevent the cleaning liquid from flowing out through the gap, and blocks the inner side edge of the assembly hole by means of the second sealing body to prevent the cleaning liquid from entering the assembly hole, such that the assembly hole is blocked in all directions by means of the first sealing body and the second sealing body, which in turn improves the leakproofness between the float supporting apparatus and the assembly hole, avoids the phenomenon that the cleaning liquid leaks from the gap between the float supporting apparatus and the assembly hole to damage the electronic components inside the cleaning device, and prolongs the service life of the cleaning device.

It should be noted that the clean water tank involved in this embodiment may be the clean water tank as described in the above-mentioned embodiment, and a reference may be made to the corresponding content in the above-mentioned embodiments for the specific implementation and working principles of the clean water tank, which will not be repeated herein.

Finally, it should be noted that: the various embodiments in the Description are described in a progressive manner, each embodiment focuses on the differences from other embodiments, and the same or similar parts among the various embodiments may be referred to each other.

The above embodiments are only intended to illustrate, instead of limiting, the technical solutions of the present disclosure. Although the present disclosure has been described in detail with reference to the foregoing embodiments, it should be understood by those of ordinary skill in the art that: modifications can still be made to the technical solutions described in the foregoing embodiments, or equivalent substitutions may be made for some of the technical features, and these modifications or substitutions may not deviate the nature of the corresponding technical solutions from the spirit and scope of the technical solutions of the embodiments of the present disclosure.

## Claims

1. An automatic water change assembly, comprising: a control apparatus and a water tank assembly, wherein the control apparatus is configured to automatically add clean water to the water tank assembly;
the water tank assembly comprises:
a clean-water tank body;
a water inlet pipe, configured to add the clean water to the clean-water tank body; and
a float valve, arranged inside the clean-water tank body and configured to move vertically with a change of a water level in the clean-water tank body;
wherein in response to the float valve being located at a first position, the control apparatus controls the water inlet pipe to stop adding the clean water to the clean-water tank body, and
in response to the float valve being located at a second position, the float valve blocks an outlet of the water inlet pipe through which water is added to the clear-water tank body.

2. The automatic water change assembly according to claim 1, wherein the float valve comprises:
a pivot rod, comprising:
a first end portion pivotally connected to a fixed rotating shaft; and
a second end portion arranged opposite to the first end portion; and
a float portion connected to the second end portion, wherein the float portion is configured to rotate relative to the first end portion of the pivot rod with rising of the water level in the clean-water tank body until the float valve is located at the first position.

3. The automatic water change assembly according to claim 2, wherein in response to that the float valve is located at the first position and the water level of the clean-water tank body continues to rise, the float portion drives the pivot rod to rotate relative to the fixed rotating shaft until the float valve is located at the second position.

4. The automatic water change assembly according to claim 2 or 3, wherein the float valve further comprises:
a plug body movably connected to the first end portion of the pivot rod, wherein the plug body is configured to move toward or away from the outlet of the water inlet pipe under pushing of the first end portion of the pivot rod, to block or unblock the outlet of the water inlet pipe.

5. The automatic water change assembly according to claim 4, wherein
the plug body comprises a cavity, the cavity comprising a downward opening; and
the first end portion of the pivot rod comprises a push rod, the push rod being capable of freely and movably extending into the cavity and configured to push, with rotation of the pivot rod, two opposite side walls of the cavity such that the plug body moves toward or away from the outlet of the water inlet pipe.

6. The automatic water change assembly according to claim 5, wherein the water tank assembly further comprises:
a fixed case accommodating the outlet of the water inlet pipe, the plug body and the first end portion of the pivot rod;
wherein the first end portion of the pivot rod is connected between two opposite side walls of the fixed case through the fixed rotating shaft and configured such that the pivot rod is rotatable around the fixed rotating shaft relative to the fixed case.

7. The automatic water change assembly according to claim 6, wherein
an inner side wall of the fixed case is provided with at least one slide way configured to be in sliding connection with the plug body.

8. The automatic water change assembly according to claim 7, wherein an outer side wall of the plug body is provided with at least one slide rail, and the slide rail cooperate with the slide way to realize sliding connection.

9. The automatic water change assembly according to any one of claims 4 to 8, wherein the plug body further comprises:
a soft rubber pad, wherein the soft rubber pad is arranged on an end surface of the plug body abutting against the outlet of the water inlet pipe, and the soft rubber pad is configured to block or unblock the outlet of the water inlet pipe in response to the plug body moving toward or away from the outlet of the water inlet pipe.

10. The automatic water change assembly according to any one of claims 1 to 9, wherein the outlet of the water inlet pipe is of a conical structure.

11. The automatic water change assembly according to any one of claims 1 to 10, wherein an overflow hole is defined at a top portion of the clean-water tank body and communicated with outside through an overflow pipe.

12. The automatic water change assembly according to any one of claims 2 to 10, further comprising:
a signal transmitting component configured to transmit a sensing signal; and
a signal sensing component configured to receive the sensing signal,
wherein one of the signal transmitting component and the signal sensing component is arranged inside the float portion, the other of the signal transmitting component and the signal sensing component is arranged on a side wall of the clean-water tank body, and
the signal sensing component is triggered in response to that the float portion moves to cause the float valve to be located at the first position, such that the control apparatus controls the water inlet pipe to stop adding the clean water to the clean-water tank body.

13. The automatic water change assembly according to claim 12, wherein the signal transmitting component comprises a magnet, and the signal sensing component comprises a Hall element.

14. The automatic water change assembly according to claim 1, comprising a float supporting apparatus, wherein the float supporting apparatus is applied to the water tank assembly and comprises a supporting main body, wherein a sealing element is arranged on a periphery of the supporting main body;
the sealing element comprises a first sealing body and a second sealing body connected to the first sealing body, wherein the first sealing body is capable of extending into an assembly hole of the clean-water tank body to block a gap between an outer wall of the supporting main body and an inner wall of the assembly hole, and
the second sealing body is capable of fitting an inner side edge of the assembly hole to block the inner side edge of the assembly hole.

15. The automatic water change assembly according to claim 14, wherein the first sealing body comprises a connecting body fitted over the supporting main body, and at least one sealing ring capable of being in interference fit with the assembly hole is arranged on the connecting body in an axial direction.

16. The automatic water change assembly according to claim 14 or 15, wherein the sealing ring and the connecting body are integrally molded.

17. The automatic water change assembly according to any one of claims 14 to 16, wherein the second sealing body and the first sealing body are integrally molded.

18. The automatic water change assembly according to any one of claims 14 to 17, wherein the supporting main body is further provided with a detachable connector detachably connected to the water tank body.

19. The automatic water change assembly according to claim 18, wherein the detachable connector comprises at least one connecting boss and at least one bolt, the connecting boss is provided with a first screw hole capable of being in threaded connection with the bolt.

20. The automatic water change assembly according to any one of claims 14 to 19, wherein the supporting main body comprises a water inlet pipeline and a float supporting frame, the float supporting frame is provided with a cavity for accommodating a float, and the water inlet pipeline is communicated with the cavity.

21. An automatic cleaning maintenance station, comprising: a water storage chamber, wherein the water storage chamber is configured to accommodate the automatic water change assembly according to any one of claims 1 to 20.
